# EUROPÄISCHE PATENTSCHRIFT

(11) **EP 2 121 320 B1**
(45) Veröffentlichungstag und Bekanntmachung des Hinweises auf die Patenterteilung: **23.03.2011**
(21) Anmeldenummer: 08707598.2
(22) Anmeldetag: 07.02.2008
(51) Int. Cl.: B32B 29/00, D21H 21/44

(54) **SICHERHEITSELEMENT**
SECURITY ELEMENT
ÉLÉMENT DE SÉCURITÉ

(30) Priorität: 07.02.2007 DE 102007005884; 28.11.2007 DE 102007057658
(43) Veröffentlichungstag der Anmeldung: 25.11.2009
(73) Patentinhaber: Leonhard Kurz Stiftung & Co. KG, 90763 Fürth (DE)
(72) Erfinder: SCHILLING, Andreas, CH-6332 Hagendorn (CH)
(74) Vertreter: Zinsinger, Norbert
(86) Internationale Anmeldenummer: PCT/EP2008/000941
(87) Internationale Veröffentlichungsnummer: WO 2008/095706

(56) Entgegenhaltungen:
- EP-A- 0 659 936
- EP-A- 1 674 286
- FR-A- 2 901 812

## Beschreibung

Die Erfindung betrifft ein Sicherheitselement in Form eines mehrschichtigen Folienkörpers zur Betrachtung im Auflicht und im Durchlicht, wobei das Sicherheitselement einen für den menschlichen Betrachter im Durchlicht transparenten oder semi-transparenten Bereich aufweist.

Es besteht die Notwendigkeit, Sicherheitsdokumente mit Sicherheitsmerkmalen auszustatten, die eine Fälschung dieser Dokumente erschweren und möglichst verhindern. Hierbei ist es bereits bekannt, Sicherheitsdokumente mit transmissiven Sicherheitsmerkmalen auszustatten, die bei Durchlichtbetrachtung überprüfbar sind und eine besonders hohe Sicherheit gegen Nachahmung mittels eines Farbkopierers bieten. So wird beispielsweise in DE-A-4334847 ein Sicherheitsdokument beschrieben, bei dem fensterförmige Durchbrechungen mittels eines Stanz- oder Schneidevorgangs in dem Träger des Sicherheitsdokuments erzeugt werden. Diese Durchbrechungen werden sodann mittels einer die Durchbrechungen allseitig überragenden und auf der Oberfläche des Trägers vollflächig befestigten, wenigstens bereichsweise transparenten Abdeckfolie verschlossen. Diese Abdeckfolie stellt unter anderem ein Sicherheitselement bereit, welches von einer innerhalb des transparenten Fensters angeordneten diffraktiven Struktur generiert ist, die von einer metallischen Reflexionsschicht unterlegt ist. Hierdurch wird innerhalb des transparenten Fensters ein Sicherheitsmerkmal bereitgestellt, welches im Auflicht sichtbar ist.

Der Erfindung liegt nun die Aufgabe zugrunde, ein Sicherheitselement zur - Betrachtung im Auflicht und im Durchlicht mit hoher Fälschungssicherheit anzugeben.

Diese Aufgabe wird von einem Sicherheitselement in Form eines mehrschichtigen Folienkörpers zur Betrachtung im Auflicht und im Durchlicht gelöst, wobei das Sicherheitselement in einem für den menschlichen Betrachter im Durchlicht transparenten oder semi-transparenten ersten Bereich eine Trägerfolie und eine partielle metallische Reflexionsschicht aufweist, in dem ersten Bereich erste Zonen, in denen die metallische Reflexionsschicht vorgesehen ist, und zweite Zonen, in denen die metallische Reflexionsschicht nicht vorgesehen ist, abwechselnd mit einer Beabstandung der Flächenschwerpunkte aufeinander folgender erster Zonen von weniger als 300 µm angeordnet sind, der erste Bereich mindestens einen Musterbereich mit Abmessungen > 300 µm und mindestens einen an dem Musterbereich angrenzenden und den Musterbereich zumindest teilweise umschließenden Hintergrundbereich aufweist, wobei sich die Beabstandung aufeinander folgender zweiter Zonen in dem Musterbereich gegenüber der Beabstandung aufeinander folgender zweiter Zonen in dem Hintergrundbereich um 5 bis 30 % unterscheidet, wodurch eine durch die Formgebung des Musterbereichs bestimmte Information für den menschlichen Betrachter im Durchlicht sichtbar wird.

Überraschenderweise wurde festgestellt, dass bei Einhaltung der oben beschriebenen Bemessungsregeln die erste Information für den menschlichen Betrachter im Auflicht nicht sichtbar ist, im Durchlicht jedoch plötzlich zu Tage tritt.

Der erste Bereich hat so für den menschlichen Betrachter im Auflicht und im Durchlicht ein unterschiedliches optisches Erscheinungsbild, wodurch ein klar erkennbares und einprägsames Sicherheitselement durch die Erfindung bereitgestellt wird. Dieses Sicherheitselement ist weiter auch nicht unter Zuhilfenahme eines Farbkopierers oder sonstiger technischer Maßnahmen nachahmbar, sodass das Sicherheitselement eine hohe Sicherheit gegen Nachahmung und Fälschung aufweist. Im Weiteren ist das erfindungsgemäße Sicherheitselement in wenigen Herstellungsschritten herstellbar und erfordert nicht den Einsatz kostspieliger Materialien, ist also auch besonders kostengünstig zu fertigen.

Vorteilhafte Weiterbildungen der Erfindung sind in den Unteransprüchen bezeichnet.

Gemäß eines bevorzugten Ausführungsbeispiels der Erfindung besitzen die ersten Zonen eine linien- oder bandförmige Formgebung. Die Breite der ersten Zonen beträgt hierbei bevorzugt weniger als 200 µm und die Länge der ersten Zonen ist erheblich größer als die Breite und bevorzugt > 1000 µm zu wählen. Die Breite der ersten Zonen wird weiter bevorzugt zwischen 10 µm und 100 µm, weiter bevorzugt zwischen 10 µm und 40 µm gewählt. Durch Einhaltung dieser Größenabmessungen wird ein hoher Kontrastunterschied erzielt und erreicht, dass den optischen Eindruck störende Diffraktionserscheinungen und willkürliche Farbspiele weitgehend vermieden werden.

Als vorteilhaft hat sich weiter erwiesen, dass im ersten Bereich die Gesamtfläche der ersten Zonen einen Flächenanteil von weniger als 50 % der Gesamtfläche der ersten und zweiten Zonen belegt, vorzugsweise von weniger als 10 % der Gesamtfläche der ersten und zweiten Zonen belegt. Des weiteren wird das Verhältnis der ersten und zweiten Bereiche zueinander vorzugsweise zwischen 70% und 95% gewählt. Durch Einhaltung dieser Bedingungen wird ein besonders deutlicher Unterschied zwischen dem optischen Eindruck des ersten Bereichs im Auflicht und im Durchlicht erzielt.

Gemäß eines bevorzugten Ausführungsbeispiels der Erfindung sind die ersten Zonen im wesentlichen parallel zueinander angeordnet, wobei die Längsachsen der ersten Zonen in Richtung einer ersten Koordinatenachse eines von der ersten Koordinatenachse und einer hierzu unterschiedlichen zweiten Koordinatenachse in dem im ersten Bereich aufgespannten Koordinatensystems orientiert sind. Bei dem Koordinatensystem kann es sich um ein durch zwei rechtwinkelig aufeinander stehende Geraden aufgespanntes Koordinatensystem handeln. Es ist jedoch auch möglich, dass es sich bei dem Koordinatensystem um ein geometrisch transformiertes Koordinatensystem handelt, dessen Koordinatenachsen beispielsweise die Form von Schlangenlinien oder Kreisen besitzen. Vorzugsweise sind bei einem derartigen transformierten Koordinatensystem die Koordinatenachsen ebenfalls rechwinkelig zueinander orientiert.

Vorzugsweise erstrecken sich erste Zonen über die Grenze zwischen Musterbereich und Hintergrundbereich. Die jeweilige erste Zone ist sowohl im Musterbereich als auch im Hintergrundbereich vorgesehen und nicht an der Grenze zwischen Musterbereich und Hintergrundbereich unterbrochen. Hierdurch wird erreicht, dass den optischen Eindruck störende Diffraktionserscheinungen vermieden werden, die unter bestimmten Bedingungen ansonsten die erste Information im Auflicht für den aufmerksamen Betrachter erahnen lassen. Durch diese Maßnahmen wird so der Kontrast zwischen dem optischen Eindruck im Auflicht und im Durchlicht weiter vergrößert. Vorzugsweise erstrecken sich hierbei die ersten Zonen über die gesamte Flächenausdehnung des ersten Bereichs in Richtung der ersten Koordinatenachse. Gemäß eines bevorzugten Ausführungsbeispiels der Erfindung sind die Flächenschwerpunktlinien der ersten Zonen entlang der ersten Koordinatenachse in Richtung der zweiten Koordinatenachse im wesentlichen konstant beabstandet. Durch diese Maßnahme wird ein gleichmäßiger, einheitlicher Hintergrund erzielt, vor dem der Musterbereich in der Durchlichtbetrachtung besonders deutlich hervortritt. Es ist jedoch weiter auch möglich, dass die Flächenschwerpunktlinien der ersten Zonen entlang der ersten Koordinatenachse in Richtung der zweiten Koordinatenachse gemäß einer eine zweite Information spezifizierenden Funktion variiert sind. Diese zweite Information hat, sofern sie eine Periodizität besitzt, bevorzugt einen Periodenabstand von mehr als 300 µm. Die zweite Information kann weiter auch ein den Musterbereich und den Hintergrundbereich gleichmäßig überlagerndes Graustufenbild, z.B. ein Porträt, bilden, das sowohl bei Auflicht- als auch bei Durchlichtbetrachtung zum Vorschein tritt und das bei Durchlichtbetrachtung weiter von der von dem Kontrastunterschied zwischen Hintergrundbereich und Musterbereich generierten ersten Information überlagert ist.

Als besonders vorteilhaft hat es sich weiter erwiesen, dass die Flächenschwerpunktlinien der ersten Zonen in Richtung der zweiten Koordinatenachse zwischen 30 und 40 µm von einander beabstandet sind. Es hat sich gezeigt, dass so die Kontrastunterschiede zwischen dem optischen Erscheinungsbild in Auflicht- und in Durchlichtbetrachtung besonders deutlich zu Tage treten und störende Einflüsse und Farbverschiebungen weitgehend vermieden werden.

Gemäß eines bevorzugten Ausführungsbeispiels der Erfindung unterscheidet sich die Breite der ersten Zonen im Musterbereich von der Breite der ersten Zonen im Hintergrundbereich um 10 bis 30 %, bevorzugt zwischen 15 und 25 %. Untersuchungen haben gezeigt, dass auch hierdurch ein besonders hoher Kontrastunterschied zwischen der Betrachtung im Auflicht und im Durchlicht erzielt wird.

Gemäß einer weiteren Ausführungsform der Erfindung sind eine oder mehrere der ersten Zonen zur Bereitstellung einer dritten Information mikrostrukturiert. So ist es beispielsweise möglich, einen von der Grundstruktur her bandförmigen ersten Bereich in Form von Zahlen, Buchstaben oder Symbolen zu mikrostrukturieren, die unter Zuhilfenahme eines technischen Hilfsmittels, beispielsweise einer Lupe, ausgelesen werden können. Mikrostrukturiert bedeutet hierbei, dass in dem Bereich dieser mikroskopischen Zahlen, Buchstaben oder Symbole ebenfalls die metallische Reflexionsschicht nicht vorgesehen ist.

Gemäß eines bevorzugten Ausführungsbeispiels der Erfindung ist zumindest in einem Teilbereich des ersten Bereichs in den ersten Zonen eine Oberflächenstruktur in die Oberfläche der Replikationsschicht abgeformt. Bei dieser Oberflächenstruktur handelt es sich bevorzugt um eine isotrope oder anisotrope Mattstruktur. Es ist jedoch auch möglich, dass es sich bei dieser Oberflächenstruktur um eine andere diffraktive Oberflächenstruktur, beispielsweise um ein Kinegram® oder um ein Hologramm handelt. Der durch diese Oberflächenstruktur generierte optische Effekt tritt bei Auflichtbetrachtung zu Tage, sodass ein besonders deutlicher Unterschied zwischen dem optischen Erscheinungsbild im Auflicht und im Durchlicht generiert wird. Es hat sich hier besonders die Verwendung von Mattstrukturen bewährt, die das einfallende Licht bei Auflichtbetrachtung gestreut reflektieren und durch diesen Effekt eine Erkennbarkeit der ersten Information bei Auflichtbetrachtung zusätzlich verhindern. Dies kann dazu verwendet werden, den Kontrastunterschied zwischen Hintergrundbereich und Musterbereich in der Durchlichtbetrachtung weiter zu erhöhen und so zu erreichen, dass die erste Information in Durchlichtbetrachtung besonders deutlich zu Tage tritt.

Die Oberflächenstruktur kann hier ganzflächig oder teilflächig im ersten Bereich in den ersten Zonen abgeformt sein. Sofern die Oberflächenstruktur lediglich in einem Teilbereich des ersten Bereiches abgeformt ist, wird dieser Teilbereich bevorzugt so gewählt, dass er den Musterbereich und einen an den Musterbereich angrenzenden Teil des Hintergrundbereichs ganz oder größtenteils bedeckt. Weiter ist es auch möglich, durch Abformung der Oberflächenstruktur in den ersten Bereich eine weitere vierte Information einzubringen, die in Auflicht- und/oder Durchlichtbetrachtung sichtbar wird, wie im folgenden beschrieben. Hierdurch können mittels der Erfindung weitere interessante optische Effekte erzielt werden.

Die der Erfindung zugrundeliegende Aufgabe wird somit im weiteren durch ein Sicherheitselement in Form eines mehrschichtigen Folienkörpers zur Betrachtung im Auflicht und im Durchlicht gelöst, das in einem für den menschlichen Betrachter im Durchlicht transparenten oder semitransparenten ersten Bereich eine Trägerfolie und eine partielle metallische Reflexionsschicht aufweist, bei dem in dem ersten Bereich erste Zonen, in denen die metallische Reflexionsschicht vorgesehen ist, und zweite Zonen, in denen die metallische Reflexionsschicht nicht vorgesehen ist, abwechselnd vorgesehen ist, wobei jede der ersten und zweiten Zonen innerhalb des ersten Bereichs eine kleinste Abmessung von weniger als 300 µm aufweist, und bei dem der erste Bereich mindestens einen Musterbereich mit Abmessungen größer als 300 µm und mindestens einen an den Musterbereich angrenzenden und den Musterbereich zumindest teilweise umschließenden Hintergrundbereich aufweist, wobei innerhalb des ersten Bereichs in zumindest einem Teil der von den ersten Zonen belegten Fläche des Hintergrundbereichs und des Mustergrundbereichs jeweils eine erste Oberflächenstruktur in die Reflexionsschicht abgeformt ist, welche das einfallende Licht zumindest teilweise aus dem Spiegelreflex der von dem Folienkörper aufgespannten Ebene ablenken, und der Flächenanteil der ersten Zonen an der Gesamtfläche jedes Musterbereichs sich von dem Flächenanteil der ersten Zonen an der Gesamtfläche jedes Hintergrundbereichs um 5 % bis 30 % unterscheidet, wodurch eine durch die Formgebung des Musterbereichs bestimmte erste Information für den menschlichen Betrachter im Durchlicht sichtbar wird.

Auch bei Einhaltung dieser Bedingungen hat sich überraschend gezeigt, dass eine Information bei Betrachtung im Auflicht für den menschlichen Betrachter nicht sichtbar ist, im Durchlicht jedoch plötzlich zutage tritt. Gemäß diesem Aspekt der Erfindung sind zwar weniger enge Bedingungen bezüglich der Strukturierung der metallischen Reflexionsschicht einzuhalten, es ist hier jedoch zusätzlich die erste Oberflächenstruktur vorgesehen, welche als "Verschleierungsstruktur" wirkt und zusätzlich dafür sorgt, dass sich die im Auflicht und im Durchlicht sichtbaren Informationen deutlich unterscheiden. Auch diesem Aspekt der Erfindung liegt so der Gedanke zugrunde, dass das Wahrnehmungsverhalten des menschlichen Auges in Auflicht- und in Durchlicht-Betrachtung unterschiedlich ist und so durch entsprechende Strukturierung des Musterbereichs und des Hintergrundbereichs eine Information in den ersten Bereich codiert werden kann, welche in Auflicht-Betrachtung für den menschlichen Betrachter nicht sichtbar ist, jedoch bei Durchlicht-Betrachtung zutage tritt. Durch das erfindungsgemäße Sicherheitselement wird ein klar erkennbares und einprägbares Sicherheitsmerkmal bereit gestellt, welches nicht unter Zuhilfenahme eines Farbkopierers oder sonstiger technischer Maßnahmen nachahmbar ist, so dass das Sicherheitselement eine hohe Sicherheit gegen Nachahmung und Fälschungen aufweist. Weiterhin ist das erfindungsgemäße Sicherheitselement in wenigen Herstellungsschritten herstellbar und erfordert nicht den Einsatz kostspieliger Materialien, ist also auch besonders kostengünstig zu fertigen.

Vorzugsweise sind die ersten und zweiten Zonen in dem ersten Bereich wie oben beschrieben ausgeformt und es wird so auf die vorhergehenden Ausführungen verwiesen. Weiter ist beim Einsatz der nun hinzu tretenden "Verschleierungsstruktur" weiter möglich, weitere Ausführungsvarianten für die Ausformung der ersten und zweiten Zonen im ersten Bereich in Kombination mit der Verschleierungsstruktur zu verwenden und auf diese Weise ebenfalls die oben beschriebenen Effekte zu erzielen. Bezüglich der Ausgestaltung der ersten und zweiten Zonen im ersten Bereich haben sich hierbei besonders folgende Varianten als vorteilhaft erwiesen:

Gemäß eines bevorzugten Ausführungsbeispiels der Erfindung sind in zumindest eine Richtung die Flächenschwerpunkte aufeinanderfolgender erster Zonen weniger als 300 µm voneinander beabstandet. Die Breite der ersten Zonen wird auch hier bevorzugt zwischen 10 µm und 150 µm, weiter bevorzugt zwischen 10 µm und 100 µm gewählt. Durch Einhaltung dieser Größenabmessungen wird ein hoher Kontrastunterschied erzielt und erreicht, dass den optischen Eindruck störende Diffraktionserscheinungen und willkürliche Farbspiele weitgehend vermieden werden.

Weiter ist es möglich, dass die Flächenschwerpunkte aufeinander folgender erster Zonen sowohl in Richtung einer ersten Koordinatenachse als auch in Richtung einer zweiten, von dieser unterschiedlichen Koordinatenachse eines in dem ersten Bereich von diesen Koordinatenachsen aufgespannten Koordinatensystems weniger als 300 µm voneinander beabstandet sind. Bei dem Koordinatensystem kann es sich hierbei auch um ein geometrisch transformiertes Koordinatensystem handeln, bei dem die Koordinatenachsen beispielsweise wellenlinienförmige oder kreisförmige Form besitzen oder die Koordinatenachsen völlig unregelmäßig verlaufen. Hierbei ist es dann weiter möglich, dass die Flächenschwerpunkte der ersten Zonen in Richtung der ersten Koordinatenachse und in Richtung der zweiten Koordinatenachse im ersten Bereich konstant beabstandet sind und die ersten und zweiten Zonen somit gemäß eines regelmäßigen, durch das Koordinatensystem bestimmten Rasters angeordnet sind. Durch Variation der Abmessungen der ersten Bereiche kann hierbei auf einfache Weise die Einhaltung der obigen Bedingungen bezüglich des relativen Flächenanteils erste Zonen im Musterbereich und Hintergrundbereich eingestellt werden. Weiter ist es auch möglich, dass sich die Beabstandungen der Flächenschwerpunkte der ersten Zonen im Musterbereich und im Hintergrundbereich in zumindest einer Richtung unterscheiden, was ebenfalls zur Einhaltung der oben beschriebenen Bedingungen verwendet werden kann. Weiter ist es auch möglich, dass die ersten Zonen nicht an einem Raster ausgerichtet sind, sondern zufällig oder pseudo-zufällig im ersten Bereich unter Einhaltung der oben beschriebenen Bedingungen verteilt sind.

Als besonders vorteilhaft hat es sich erwiesen, dass sich die minimale sowie die maximale mittlere Flächenbelegung durch die ersten Zonen bezogen auf eine Abmessung von 300 µm x 300 µm jedes Musterbereichs von der minimalen bzw. der maximalen mittleren Flächenbelegung durch die ersten Zonen bezogen auf eine Abmessung von 300 µm x 300 µm jedes Hintergrundbereichs jeweils um 5 % bis 30 % unterscheidet, für die minimale mittlere Flächenbelegung vorzugsweise zwischen 5 und 20 % und für die maximale mittlere Flächenbelegung zwischen 15 und 30 % unterscheidet. Hierdurch wird sichergestellt, dass ein besonders hoher Kontrastunterschied zwischen Auflicht- und Durchlicht-Betrachtung erzielt wird. Besonders vorteilhaft ist es hierbei, dass die mittlere Flächenbelegung durch die ersten Zonen bezogen auf eine Abmessung von 300 µm x 300 µm in dem Musterbereich und/oder in dem Hintergrundbereich jeweils konstant ist. Weiter ist es jedoch auch möglich, dass die mittlere Flächenbelegung durch die ersten Zonen bezogen auf eine Abmessung von 300 µm x 300 µm in dem Musterbereich und/oder in dem Hintergrundbereich zur Ausbildung einer zweiten Information variiert ist. So ist es beispielsweise möglich - wie bereits oben beschrieben - ein den Musterbereich und den Hintergrundbereich gleichmäßig überlagerndes Graustufenbild, beispielsweise ein Portrait, als zweite Information bereit zu stellen, das bei Auflicht-Betrachtung und ggf. bei Durchlicht-Betrachtung zum Vorschein tritt und das bei Durchlicht-Betrachtung weiter von der ersten Information überlagert wird, die von dem Kontrastunterschied zwischen dem Hintergrundbereich und dem Musterbereich generiert wird. So weist beispielsweise der Musterbereich ein oder mehrere erste Unterbereiche und ein oder mehrere zweite Unterbereiche mit jeweiligen Abmessungen größer als 300 µm auf, wobei sich der Flächenanteil der ersten Zonen in den ersten Unterbereichen von den Flächenanteilen der ersten Zonen in den zweiten Unterbereichen jeweils zwischen 2 % und 5 % zur Ausbildung eines Graustufenbildes im Durchlicht unterscheidet.

Gemäß eines bevorzugten Ausführungsbeispiels der Erfindung belegt im Musterbereich die Gesamtfläche der ersten Zonen einen Flächenanteil von weniger als 40 % der Gesamtfläche des Musterbereichs, bevorzugt zwischen 5 % und 30 %. Hierdurch lassen sich besonders große Kontrastunterschiede zwischen der sich im Auflicht und im Durchlicht zeigenden Information erzielen.

Gemäß eines bevorzugten Ausführungsbeispiels der Erfindung wird die als Verschleierungsstruktur verwendete erste Oberflächenstruktur innerhalb des ersten Bereichs in zumindest 50 %, vorteilhafterweise in zumindest 90 % der von den ersten Zonen belegten Flächen in die Reflexionschicht abgeformt. Dabei ist es besonders vorteilhaft, wenn die erste Oberflächenstruktur innerhalb des Hintergrundbereichs und des Mustersbereichs jeweils in zumindest 50 %, vorteilhafterweise in zumindest 90 % der von den ersten Zonen belegten Flächen des Hintergrundbereichs bzw. des Musterbereichs in die Reflexionsschicht abgeformt ist. Hierdurch wird eine Verschleierungswirkung erzielt, die es ermöglicht, den Kontrastunterschied zwischen Hintergrundbereich und Musterbereich in der Durchlicht-Betrachtung weiter zu erhöhen. Als besonders vorteilhaft hat sich hierbei weiter erwiesen, die mittlere Flächenbelegung des Musterbereichs und des Hintergrundbereichs durch Bereiche von ersten Zonen, in denen die erste Oberflächenstruktur in die Reflexionsschicht abgeformt ist, so zu wählen, dass sie nicht mehr als 30 % divergiert, bevorzugt konstant ist. Die mittlere Flächenbelegung wird hierbei bevorzugt auf eine Abmessung von 300 µm x 300 µm bezogen. Durch eine derartige Vorgehensweise werden die Übergänge zwischen Hintergrundbereich und Musterbereich besonders gut verschleiert, so dass der Kontrastunterschied zwischen Hintergrundbereich und Musterbereich in der Durchlicht-Betrachtung erhöht werden kann.

Gemäß eines bevorzugten Ausführungsbeispiels der Erfindung werden die ersten Oberflächenstrukturen aus der Gruppe Mattstruktur, Makrostruktur und diffraktive Struktur ausgewählt oder stellen eine Kombination dieser Oberflächenstrukturen dar. Als besonders vorteilhaft hat sich der Einsatz von isotropen oder anisotropen Mattstrukturen erwiesen die das einfallende Licht bei Auflicht-Betrachtung gestreut reflektieren und durch diesen Effekt eine Erkennbarkeit der ersten Information bei Auflicht-Betrachtung besonders gut verhindern. Vorzugsweise werden hierbei Mattstrukturen eingesetzt, deren Korrelationslängen im Bereich von 100 nm bis 20 µm liegen und deren Strukturtiefen im Bereich von 50 nm bis 5 µm liegen.

Weiter hat sich auch der Einsatz von binären oder kontinuierlichen Linsenstrukturen bewährt, die in der Oberflächen der Reflexionsschicht abgeformt sind und durch die sich kontinuierlich ändernde Ablenkung des rückreflektierten Lichts die Erkennbarkeit der ersten Information bei Auflicht-Betrachtung wirkungsvoll verschleiern. Es können hierbei beispielsweise zylinderlinsenförmige Strukturen mit einer Linienzahl von 1 bis 200 Umm, aber auch sphärische oder asphärische Linsenformen als Oberflächenstrukturen eingesetzt werden. Die Strukturtiefe dieser Strukturen liegt bevorzugt im Bereich von 50 nm bis 5 µm.

Weiter hat sich auch der Einsatz von linearen oder gekreuzten Beugungsgittern, insbesondere Sinusgittern, als erste Oberflächenstruktur bewährt. Vorzugsweise liegt die Spatialfrequenz dieser Beugungsgitter im Bereich von 200 Umm bis 3000 Umm und die Strukturtiefe dieser Strukturen im Bereich von 50 nm bis 500 nm. Auch der Einsatz sonstiger diffraktiver Oberflächenstrukturen ist möglich, wobei durch den Einsatz von Oberflächenstrukturen, die interessante optisch variable Effekte zeigen (beispielsweise ein Kinegram®), die Erkennbarkeit der ersten Information unter Auflicht-Betrachtung besonders gut verhindert werden kann. Durch die Beugung des Lichts aus dem Spiegelreflex und durch die farbaufspaltende Wirkung dieser Strukturen wird die Erkennba-rkeit der ersten Information in Auflicht-Betrachtung wirkungsvoll verschleiert.

Weiter hat sich auch der Einsatz von asymmetrischen Blaze-Gittern als erste Oberflächenstruktur bewährt, wobei hier vorzugsweise die Spatialfrequenz in einem Bereich von 100 bis 2000 Umm und die Strukturtiefe im Bereich von 200 nm bis 5 µm gewählt wird.

Gemäß eines bevorzugten Ausführungsbeispiels der Erfindung wird durch Abformung der ersten Oberflächenstruktur nicht nur eine Verschleierung der ersten Information bewirkt, sondern weitere eine vierte Information in den ersten Bereich eingebracht, die in Auflicht- und/oder Durchlicht-Betrachtung sichtbar wird, wie dies später auch im folgenden beschrieben ist. Vorzugsweise wird die vierte Information von der ersten Oberflächenstruktur hierbei im Auflicht in einem Bereich bereit gestellt, der den Bereich, in dem im Durchlicht die erste Information sichtbar ist, zumindest teilweise überdeckt. Hierdurch wird das menschliche Auge zusätzlich in Auflicht-Betrachtung "abgelenkt" was die Erkennbarkeit der ersten Information bei Auflicht-Betrachtung zusätzlich erschwert.

Die erste Oberflächenstruktur ist so vorzugsweise in einem den ersten Bereich zumindest teilweise überdeckenden zweiten Bereich vorgesehen. Besonders vorteilhaft hat es sich hierbei erwiesen, dass der zweite Bereich den ersten Bereich überragt.

Der zweite Bereich kann musterförmig zur Bereitstellung der vierten Information ausgeformt sein. Weiter ist es auch möglich, dass die vierte Information durch ein oder mehrere der folgenden Parameter bestimmt wird: Ausformung des zweiten Bereichs, Ausformung der Bereiche, in denen die erste Oberflächenstruktur in die Reflexionsschicht abgeformt ist, Strukturparameter der ersten Oberflächenstruktur (Strukturparameter bewirken den jeweiligen optisch variablen Effekt, in ihnen ist beispielsweise ein Bildinhalt eines Hologramms codiert), Ausformung von Bereichen, in denen unterschiedliche Oberflächenstrukturen als erste Oberflächenstruktur in die Reflexionschicht abgeformt sind.

Gemäß eines bevorzugten Ausführungsbeispiels der Erfindung weist der zweite Bereich zwei oder mehrere Unterbereiche auf, in denen als erste Oberflächenstruktur unterschiedliche Oberflächenstrukturen in die Reflexionsschicht abgeformt sind. Vorzugsweise sind hierbei diese Unterbereiche musterförmig ausgeformt und besitzen jeweils Abmessungen größer als 300 µm, wodurch zumindest ein Teil der vierten Information durch die musterförmige Ausformung der Unterbereiche bereit gestellt wird. Es hat sich gezeigt, dass durch eine derartige Ausgestaltung der ersten Oberflächenstruktur eine Erkennbarkeit der ersten Information bei Auflicht-Betrachtung besonders wirkungsvoll verhindert werden kann.

Ein besonders vorteilhaftes Ausführungsbeispiel der Erfindung besteht weiter darin, dass der zweite Bereich eine Vielzahl erster, gleichförmig ausgeformter Unterbereiche und eine Vielzahl zweiter, gleichförmig ausgeformter Unterbereiche umfasst, wobei in den ersten Unterbereichen und in den zweiten Unterbereichen unterschiedliche Oberflächenstrukturen in die Reflexionsschicht abgeformt sind und/oder die ersten und zweiten Unterbereiche eine unterschiedliche Formgebung besitzen, und die ersten und zweiten Unterbereiche sowie optional noch weitere Unterbereiche in Form eines repetitiven Musters angeordnet sind. Vorzugsweise überdeckt das repetitive Muster den Musterbereich und den Hintergrundbereich jeweils zumindest teilweise, weiter bevorzugt vollständig. Weiter hat es sich hierbei bewährt, dass die ersten und zweiten Unterbereiche an einem ein- oder zweidimensionalen Raster ausgerichtet sind. Durch eine derartige Ausgestaltung der ersten Oberflächenstruktur wird die Erkennbarkeit der ersten Information bei Auflicht-Betrachtung besonders wirkungsvoll verhindert, da durch die repetitive Anordnung die Wahrnehmung des menschlichen Betrachters zusätzlich beeinflusst wird und somit die Erkennbarkeit der ersten Information bei Auflicht-Betrachtung zusätzlich behindert wird.

Gemäß eines bevorzugten Ausführungsbeispiels der Erfindung wird in einem innerhalb des ersten Bereichs angeordneten zweiten Bereich eine erste Oberflächenstruktur in eine Replizierschicht des Sicherheitselements abgeformt oder eine erste Dekorschicht in dem Sicherheitselement vorgesehen, welches eine vierte Information bereitstellt. Die vierte Information wird so durch die Formgebung des zweiten Bereiches sowie durch die Oberflächenstruktur bzw. die Dekorschicht bestimmt. Als Oberflächenstruktur werden hier vorzugsweise diffraktive Strukturen, wie beispielsweise Kinegrame® und Hologramme, Mattstrukturen, insbesondere auch anisotrope Mattstrukturen, oder Makrostrukturen, beispielsweise Blaze-Gitter oder auch asymmetrische Strukturen verwendet. Ats-Oekorschicht werden insbesondere Dekorschichten mit einer transluzenten Körperfarbe verwendet, beispielsweise Dünnfilmschichtsysteme, cholesterische Flüssigkristallschichten oder Schichten, welche optisch variable Pigmente enthalten. Je nach Art der verwendeten Oberflächenstrukturen und Dekorschichten, der Anordnung dieser Oberflächenstrukturen bzw. Dekorschichten und der Wahl der an diesen Oberflächenstrukturen bzw. Dekorschichten angrenzenden Schichten kann hierbei erreicht werden, dass die vierte Information lediglich bei Auflichtbetrachtung, lediglich bei Durchlichtbetrachtung oder sowohl bei Auflicht - als auch bei Durchlichtbetrachtung sichtbar ist, wie im folgenden erläutert.

So ist es beispielsweise möglich, dass die erste Oberflächenstruktur bzw. die erste Dekorschicht in den von dem zweiten Bereich überdeckten ersten Zonen, jedoch nicht in den von dem zweiten Bereich überdeckten ersten Zonen abgeformt bzw. vorgesehen ist, sodass die vierte Information lediglich bei Auflichtbetrachtung zu Tage tritt. Weiter ist es auch möglich, dass die erste Oberflächenstruktur bzw. die erste Dekorschicht den von dem zweiten Bereich überdeckten zweiten Zonen, nicht jedoch in den von dem zweiten Bereich überdeckten ersten Zonen abgeformt bzw. vorgesehen ist. Die vierte Information ist so im Durchlicht und je nach Gestalt der umgebenden Schichten und der Art der verwendeten Dekorschicht und des Untergrunds bei Auflichtbetrachtung auch im Auflicht sichtbar.

Bevorzugt ist die Replizierschicht, in der die erste Oberflächenstruktur abgeformt ist bzw. die erste Dekorschicht zwischen der metallischen Reflexionsschicht und einer ersten Oberfläche des Sicherheitselements angeordnet. Weiter ist in einem innerhalb des ersten Bereiches angeordneten dritten Bereich eine zweite Oberflächenstruktur in einer Replizierschicht des Sicherheitselements abgeformt oder eine zweite Dekorschicht in dem Sicherheitselement vorgesehen, welche eine fünfte Information bereitstellt, wobei die Replizierschicht bzw. die zweite Dekorschicht zwischen der metallischen Reflektionsschicht und einer zweiten Oberfläche des Sicherheitselements angeordnet ist. So ist bei Betrachtung von Seiten der ersten Oberfläche im Auflicht die vierte Information und bei Betrachtung von Seiten der zweiten Oberfläche im Auflicht die fünfte Information sichtbar. Weiter ist es auch möglich, dass die erste Oberflächenstruktur bzw. die erste Dekorschicht in den von dem zweiten Bereich überdeckten zweiten Zonen abgeformt bzw. vorgesehen ist. Weiter ist dann bevorzugt in einem innerhalb des ersten Bereiches angeordneten dritten Bereich eine zweite Oberflächenstruktur in einer Replizierschicht des Sicherheitselements abgeformt oder eine zweite Dekorschicht in dem Sicherheitselement vorgesehen ist, welche eine fünfte Information bereitstellt, wobei die Replizierschicht bzw. die zweite Dekorschicht zwischen der metallischen Reflexionsschicht und einer Oberfläche des Sicherheitselements angeordnet ist, sodass bei Betrachtung von Seiten dieser Oberfläche im Auflicht die fünfte Information und bei Betrachtung im Durchlicht die vierte Information sichtbar ist. Hierbei ist es weiter möglich, dass in einem innerhalb des ersten Bereichs angeordneten vierten Bereich eine dritte Oberflächenstruktur in einer Replizierschicht des Sicherheitselements abgeformt oder eine dritte Dekorschicht in dem Sicherheitselement vorgesehen ist, welche eine sechste Information bereitstellt, wobei die Replizierschicht bzw. die dritte Dekorschicht zwischen der metallischen Reflexionsschicht und der anderen Oberfläche des Sicherheitselements angeordnet ist, sodass bei Betrachtung von Seiten der einen Oberfläche im Auflicht die fünfte Information und bei Betrachtung von Seiten der anderen Oberfläche im Auflicht die sechste Information sichtbar ist und bei Durchlichtbetrachtung die vierte Information sichtbar ist.

Durch die Variation der oben beschriebenen Ausführungsvariante sind mittels der Erfindung zahlreiche interessante optische Effekte erzielbar. Hierbei werden die zweiten, dritten und/oder vierten Bereiche bevorzugt so gewählt, dass sie den Musterbereich zumindest teilweise überschneiden und sich so in ein und demselben Bereich bei Durchlichtbetrachtung und bei Auflichtbetrachtung für den menschlichen Betrachter unterschiedliche optische erkennbare Informationen zeigt. In diesem Sinne ist es auch vorteilhaft, wenn sich der zweite Bereich mit dem dritten Bereich, der dritte mit dem vierten Bereich oder der zweite, der dritte und der vierte Bereich überschneiden. Weiter ist es auch möglich, dass der zweite, dritte und/oder vierte Bereich dem Musterbereich entspricht, sodass der Musterbereich bei Auflicht- und Durchlichtbetrachtung ein unterschiedliches optisch variables Erscheinungsbild zeigt.

Weiter ist es auch möglich, durch die im folgenden beschriebene Vorgehensweise eine Ausführungsform eines erfindungsgemässen Sicherheitselements zu schaffen, bei dem in Auflicht-Betrachtung von der einen Seite, bei Auflicht-Betrachtung von der anderen Seite und bei Durchlicht-Betrachtung sich für den menschlichen Betrachter jeweils ein unterschiedliches optisches Erscheinungsbild zeigt:

So wird gemäß eines weiteren bevorzugten Ausführungsbeispiels der Erfindung in dem Sicherheitselement eine von der metallischen Reflexionsschicht beabstandete weitere partielle metallische Reflexionsschicht vorgesehen, die deckungsgleich zur ersten metallischen Reflexionsschicht in den ersten Zonen vorgesehen ist und in den zweiten Zonen nicht vorgesehen ist. In die Oberfläche der weiteren metallischen Reflexionsschicht wird dann weiter eine zweite Oberflächenstruktur abgeformt, welche sich vorzugsweise von der ersten Oberflächenstruktur unterscheidet. Die zweite Oberflächenstruktur ist hierbei vorzugsweise in gleicher Weise wie oben für die erste Oberflächenstruktur beschrieben ausgebildet bzw. in dem zweiten Bereich vorgesehen. Diesbezüglich wird auf die obigen Ausführungen verwiesen. Vorzugsweise stellt die zweite Oberflächenstruktur hierbei eine sich von der vierten Information unterscheidende fünfte Information bereit, d.h. es unterscheidet sich die Formgebung des zweiten Bereichs, die (lokalen) Strukturparameter der ersten und zweiten Oberflächenstruktur und/oder die Ausformung der Bereiche, in denen die zweite Oberflächenstruktur in die weitere Reflexionsschicht abgeformt ist. So wird bei Betrachtung von Seiten der Reflexionsschicht im Auflicht die vierte Information, bei Betrachtung von Seiten der weiteren Reflexionschicht die fünfte Information und bei Betrachtung im Durchlicht die erste Information sichtbar.

Diese Ausführungsform der Erfindung kann im weiteren noch mit den oben beschriebenen Ausführungsbeispielen variiert werden, bei denen beidseitig der metallischen Reflexionsschicht erste bzw. zweite Oberflächenstrukturen und/oder erste bzw. zweite Dekorschichten in dem Sicherheitselement zur Erzielung der oben beschriebenen Effekte vorgesehen sind.

Gemäß eines bevorzugten Ausführungsbeispiels der Erfindung ist das Sicherheitselement ein Sicherheitsdokument, beispielsweise ein Wertdokument wie eine Banknote, ein Identifizierungsdokument, beispielsweise ein Pass, oder ein Authentifizierungsdokument, beispielsweise ein Label zur Produktsicherung. Das Sicherheitselement weist hierbei bevorzugt ein Trägersubstrat, insbesondere umfassend ein Papiersubstrat, auf. Im ersten Bereich ist in das Trägersubstrat hierbei bevorzugt eine fensterförmige Durchbrechung eingebracht. Die Trägerfolie besitzt vorzugsweise die Form eines Streifens und überragt die fensterförmige Durchbrechung beidseitig zumindest in Richtung der Längsachse des Streifens.

Weiter ist es auch möglich, dass das Sicherheitselement eine Laminierfolie ist. Eine solche Laminierfolie kann neben dem ersten Bereich auch einen oder mehrere weitere Bereiche aufweisen, in denen weitere Sicherheitselemente vorgesehen sind. Die Laminierfolie kann hierbei auch in Form eines Bandes oder eines Patches ausgeformt sein, welcher zur Applikation auf einem Trägersubstrat, beispielsweise auf einem Papierträger einer Banknote, vorgesehen ist.

Im Folgenden wird die Erfindung anhand von mehreren Ausführungsbeispielen unter Zuhilfenahme der beiliegenden Zeichnung beispielhaft erläutert.
- Fig. 1: zeigt eine Draufsicht auf ein erfindungsgemäßes Sicherheitselement.
- Fig. 2: zeigt eine schematische, nicht maßstabsgetreue Schnittdarstellung des Sicherheitselements nach Fig. 1.
- Fig. 3: zeigt eine schematische, nicht maßstabsgetreue Darstellung zur Erläuterung der Strukturierung einer metallischen Reflexionsschicht des Sicherheitselements nach Fig. 1 in erste und zweite Zonen.
- Fig. 4: zeigt eine schematische, nicht maßstabsgetreue Schnittdarstellung eines weiteren erfindungsgemäßen Sicherheitselements.
- Fig. 5: zeigt eine Draufsicht auf das Sicherheitselement nach Fig. 4.
- Fig. 6: zeigt eine Draufsicht auf ein weiteres erfindungsgemäßes Sicherheitselement.
- Fig. 7: zeigt eine schematische, nicht maßstabsgetreue Schnittdarstellung des Sicherheitselements nach Fig. 6.
- Fig. 8: zeigt eine schematische, nicht maßstabsgetreue Schnittdarstellung eines weiteren erfindungsgemäßen Sicherheitselements.

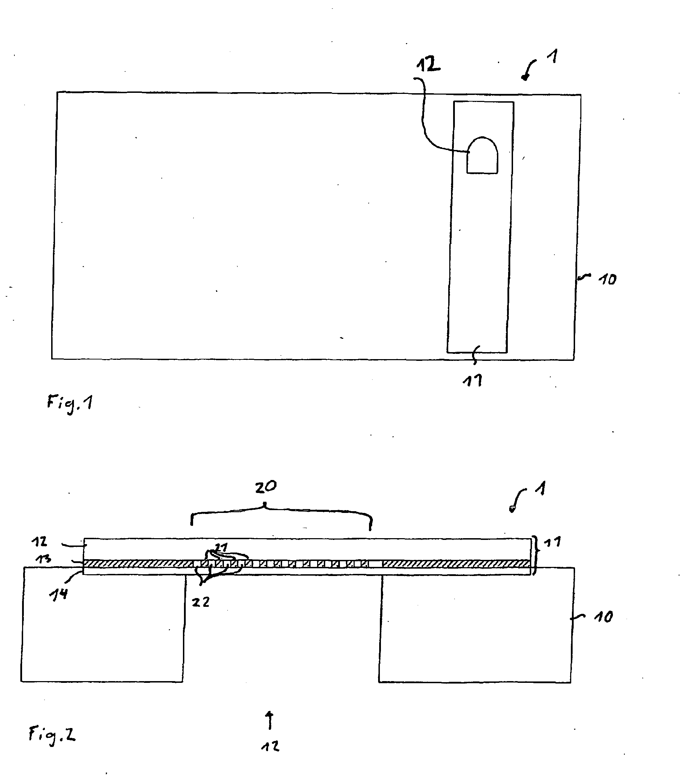

Fig. 1 zeigt eine Draufsicht auf ein Sicherheitsdokument 1, bei dem es sich um eine Banknote handelt. Es ist jedoch auch möglich, dass das Sicherheitselement 1 einen Scheck, einen Reisescheck, ein Software-Zertifikat, einen Ausweis oder dergleichen darstellt.

Das Sicherheitsdokument 1 weist ein Trägersubstrat 10 und ein auf das Trägersubstrat 10 appliziertes Folienelements 11 auf. Das Trägersubstrat 10 besteht aus einem Papiermaterial. Bei dem Papiermaterial handelt es sich vorzugsweise um eine für Banknoten verwendete Papierqualität, die in bekannter Weise mit Wasserzeichen, speziellen Aufdrucken und sonstigen Sicherheitselementen versehen sein kann. Derartige weitere Sicherheitselemente bestehen beispielsweise aus einem Stahltiefdruck, aus einem Mikrodruck oder einem reflektierenden Sicherheitsmerkmal, beispielsweise einem Hologramm, oder Farbwechselelement.

Das Trägersubstrat aus einem Papiermaterial besitzt vorzugsweise eine Dicke von etwa 100 µm. Weiter ist es auch möglich, dass als Trägersubstrat ein mehrschichtiges Substrat bestehend aus ein oder mehreren Papier- und/oder Kunststofflagen verwendet werden kann oder ein vollständig aus einem Kunststoffsubstrat bestehendes Trägersubstrat verwendet werden kann.

Wie in Fig. 1 gezeigt, weist das Trägersubstrat eine fensterartige Durchbrechung 12 auf. Diese fensterartige Durchbrechung kann in beliebiger Anordnung und Formgebung im Bereich des Folienelements 11 angeordnet sein. Es ist hierbei auch möglich, dass mehrere fensterartige Durchbrechungen 12 im Bereich des Folienelements 11 angeordnet sind. Die fensterartige Durchbrechung 12 wird bevorzugt vor Aufbringung des Folienelements 11 mittels eines Stanz- oder Schneidvorgangs in das Trägersubstrat 10 eingebracht. Weiter ist es auch möglich, dass das Trägersubstrat keine fensterförmige Durchbrechung aufweist, sondern in dem Bereich der fensterförmigen Durchbrechung nach Fig.1 transparent ausgestaltet ist, insbesondere dann, wenn es sich bei dem Trägersubstrat 10 um ein Kunststoffsubstrat oder eine Kombination aus einem Papier- und Kunststoffsubstrat handelt.

Das Folienelement 11 hat vorzugsweise eine streifen- oder fadenförmige Form, vorzugsweise mit einer Streifenbreite im Bereich von 4 bis 30 mm. Vorzugsweise erstreckt sich das Folienelement 11 hierbei quer über die gesamte Breite oder Länge des Trägersubstrats 10, wodurch das Aufbringen des Folienelements 11 aus produktionstechnischer Sicht vereinfacht wird.

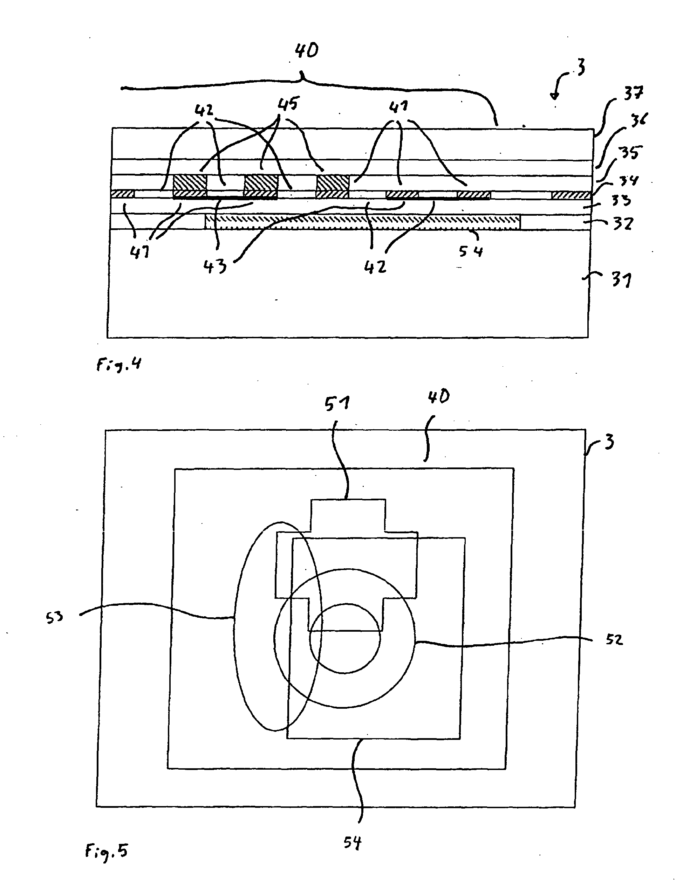

Der Aufbau des Folienelements 11 wird nun anhand von Fig. 2 näher erläutert. Fig. 2 zeigt eine Schnittdarstellung des Sicherheitsdokuments 1 im Bereich der fensterförmigen Durchbrechung 12. Wie in Fig. 2 dargestellt, weist das Folienelement 11 eine Trägerfolie 12, eine partielle metallische Reflexionsschicht 13 und eine Schutzlackschicht und/oder eine Haftvermittlungsschicht 14 auf. Weiter ist es auch möglich, dass das Folienelement 11 noch weitere Schichten aufweist, wie im weiteren dann auch anhand von Fig. 4 erläutert.

Bei der Trägerfolie 12 handelt es sich um eine PET oder BOPP - Folie einer Schichtdicke von 10 bis 50 µm. Die Funktion der Trägerfolie 12 besteht darin, für die notwendige Stabilität für die Überbrückung der Durchbrechung zu sorgen, sodass die vorzugsweise zu wählende Dicke der Trägerfolie 12 im wesentlichen von der Breiten-und Längeabmessung der Durchbrechung 12 bestimmt wird. Vorzugsweise wird die Trägerfolie 12 hierbei von einer Kunststofffolie einer Schichtdicke von mindestens 10 µm, bevorzugt zwischen 10 und 24 µm gebildet.

Die metallische Reflexionsschicht 13 besteht beispielsweise aus Aluminium, Chrom, Kupfer, Gold oder Silber oder einer Legierung dieser Materialien und wird vorzugsweise mittels Bedampfen oder Sputtern aufgebracht. Die Dicke der metallischen Reflexionsschicht 13 beträgt vorzugsweise 20 nm bis 100 nm, sodass sie für den menschlichen Betrachter opak erscheint. In einem innerhalb des Bereichs der fensterartigen Durchbrechungen angeordneten Bereich 20 ist das Folienelement 11 transparent oder semi-transparent ausgestaltet. Die metallische Reflexionsschicht 13 ist in dem Bereich 20 partiell ausgestaltet und lediglich in dem Bereich einer Vielzahl erster Zonen 21 vorgesehen. Der Bereich 20 ist somit in eine Vielzahl erster Zonen 21 und zweiter Zonen 22 unterteilt, wobei in den ersten Zonen 21 die metallische Reflexionsschicht vorgesehen ist und in den zweiten Zonen 22 die metallische Reflexionsschicht nicht vorgesehen ist. In den Zonen 22 ist das Metall so beispielsweise nachträglich durch Demetallisierung entfernt worden, beispielsweise durch Positiv/Negativätzen, mittels einer Waschmaske oder mittels Laserablation. Weiter ist es auch möglich, dass das Metall lediglich in den ersten Zonen 21, nicht jedoch in den zweiten Zonen 22, mittels einer Bedampfungsmaske aufgebracht worden ist.

Weiter ist es auch möglich, dass neben dem Bereich 20 im Bereich der fensterartigen Durchbrechung 12 noch weitere, sich nicht mit dem Bereich 20 überschneidende Bereiche vorgesehen sind, in denen weitere Sicherheitselemente, insbesondere transmissive Sicherheitselemente bereitgestellt werden. In diesen anderen Bereichen kann die Reflexionsschicht 13 nicht vorgesehen sein, vollflächig vorgesehen sein oder anders strukturiert sein als in dem Bereich 20. Dabei ist es auch möglich, dass der Bereich 20 in Form einer eine bestimmte Information vermittelnden Formgebung ausgeformt ist, beispielsweise in Form einer Zahl, eines Buchstabens oder eines Symbols.

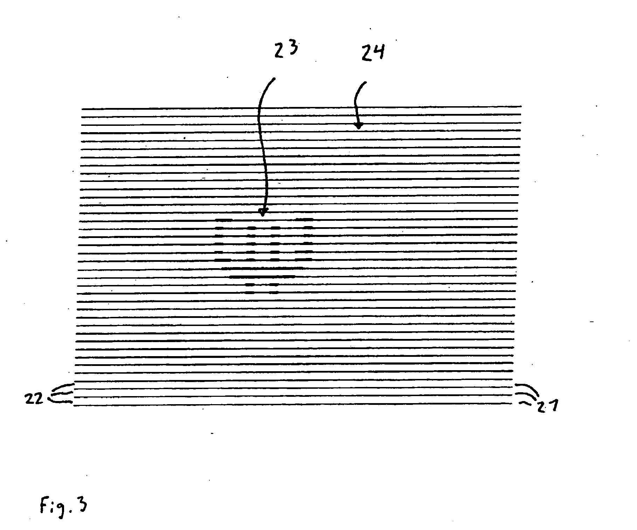

Die Strukturierung der metallischen Reflexionsschicht 13 in dem Bereich 20 wird nun anhand von Fig. 3 im Detail erläutert. Fig. 3 zeigt eine nicht maßstabsgetreue Draufsicht auf einen Aufschnitt der metallischen Reflexionsschicht in dem Bereich 20. Wie in Fig. 3 dargestellt, wechseln sich die ersten Zonen 21, in denen die Metallschicht vorgesehen ist, und die zweiten Zonen 22 ab, sodass auf eine erste Zone 21 eine zweite Zone 22 und auf eine zweite Zone 22 eine erste Zone 21 folgt. Die Flächenschwerpunkte aufeinander folgender erster Zonen 21 sind weniger als 300 µm voneinander beabstandet angeordnet, in dem Ausführungsbeispiel nach Fig. 3 circa 100 µm voneinander beabstandet. Wie in Fig. 3 gezeigt, besitzen die ersten Zonen hierbei eine bandförmige Formgebung und sind im wesentlichen parallel zueinander angeordnet. Die Längsachse der ersten Zonen 21 und der zweiten Zonen 22 sind in Richtung einer ersten Koordinatenachse eines Koordinatensystems orientiert, welches durch die so definierte erste Koordinatenachse und eine hierzu rechtwinkeligen zweiten Koordinatenachse aufgespannt wird. Weiter sind, wie in Fig. 3 angedeutet, die Flächenschwerpunktlinien der ersten Zonen 21 entlang der ersten Koordinatenachse in Richtung der zweiten Koordinatenachse im wesentlichen konstant beabstandet.

Weiter ist ein vollständig oder teilweise von einem Hintergrundbereich 24 umschlossener Musterbereich 23 vorgesehen, in welchem, wie in Fig. 3 verdeutlicht, jedoch nicht maßstäblich verdeutlicht, die Beabstandung aufeinander folgender zweiter Bereiche gegenüber der Beabstandung aufeinander folgender Bereiche in dem Hintergrundbereich 24 um 5 bis 30 % unterschiedlich gewählt ist. So beträgt die Breite der ersten Zone 21 in dem Hintergrundbereich 24 in dem Ausführungsbeispiel nach Fig. 3 60 µm und in dem Musterbereich 23 80 µm mit einem Raster von 100 µm. Der Musterbereich hat die Form eines Symbols "€". Wird das Sicherheitsdokument 1 im Durchlicht betrachtet, so zeigt sich im Bereich 20 eine durch die Formgebung des Musterbereichs 23 definierte Information, es zeigt sich so vor einem hellen Hintergrund ein in einem deutlich dunkleren Ton gehaltenes Symbol, hier das Symbol "€". Wird das Sicherheitsdokument 1 im Auflicht betrachtet, so verschwindet dieser Eindruck wieder.

Wie bereits oben ausgeführt, ist es auch möglich, die Flächenschwerpunktlinien der ersten Zonen an einem geometrisch transformierten Koordinatensystem zu orientieren, sodass die Flächenschwerpunktlinien der ersten Zonen 21 beispielsweise schlangenlinienförmig oder in Form von konzentrischen Kreisen orientiert sind. Die Beabstandung der ersten Zonen 21 voneinander wird hier vorzugsweise ebenfalls weitgehend konstant gehalten, sodass das Symbol "€" in Durchlicht-Betrachtung vor einem einheitlich hellen Hintergrund erscheint. Es ist jedoch auch möglich, dass die Beabstandung der ersten Zonen 21 voneinander über die gesamte Breite der ersten Zonen oder bereichsweise variiert wird, und so die erste Information sowohl in Auflicht als auch in Durchlicht-Betrachtung von einer zweiten Information überlagert wird, beispielsweise von einem entsprechenden Graustufenbild überlagert wird. Weiter ist es auch möglich, dass sich die ersten Zonen 21 und die zweiten Zonen 22 sowohl in eine erste Richtung als auch in eine zweite, hiervon unterschiedliche, Richtung abwechseln. Vorzugsweise wechseln sich hierbei die ersten Zonen sowohl in Richtung der ersten Koordinatenachse als auch in Richtung der zweiten Koordinatenachse ab.

Anhand von Fig. 4 wird nun ein weiteres Ausführungsbeispiel der Erfindung verdeutlicht. Fig. 4 zeigt ein Sicherheitselement 3, bei dem es sich um eine Laminierfolie handelt. Diese Laminierfolie kann beispielsweise als Folienelement wie das Folienelement 11 zur Applikation auf einem Trägersubstrat eines Sicherheitsdokuments verwendet werden oder auch einen Bereich einer noch nicht vereinzelten Folienbahn darstellen.

Das Sicherheitselement 3 weist eine Trägerfolie 31, eine Dekorschicht 32, eine Replizierschicht 33, eine metallische Reflexionsschicht 34, eine Dekorschicht 35, eine Schutzlackschicht 36 und eine Kleberschicht 37 auf. Die Trägerfolie 31 besteht aus einer PET-Folie mit einer Dicke von 12 µm. Die Dekorschicht 32 ist lediglich bereichsweise in einem Bereich 54 des Sicherheitselements 3 vorgesehen. Die Dekorschicht 32 besteht in diesem Bereich aus einem Dünnfilmschichtsystem, welches bei Betrachtung durch den menschlichen Betrachter blickwinkelabhängige Farbverschiebungseffekte zeigt. Dieses Dünnfilmschichtsystem besteht vorzugsweise aus mehreren sich abwechselnden hoch und niedrig brechenden Schichten, deren Schichtdicke jeweils so gewählt ist, dass sie die λ\2 oder λ\4 Bedingung für ein oder mehrere Wellenlängen im sichtbaren Spektrum des Lichts erfüllen (λ = Wellenlänge des Lichts; optische Dicke, d.h. geometrische Dicke multipliziert mit dem Brechungsindex in dem jeweiligen Medium erfüllt die λ\2 bzw. λ\4 Bedingung). Weiterhin ist es auch möglich, lediglich eine diese Bedingung erfüllende optische Distanzschicht zu verwenden, an die vorzugsweise in Richtung der Trägerfolie 31 eine Absorptionsschicht, beispielsweise mit 10 % Absorption, vorzugsweise in Form einer dünnen metallischen Schicht, anschließt.

Die Replizierschicht 33 hat eine Schichtdicke von 0,5 bis 5 µm und besteht aus einem thermischen Replizierlack oder einem UV-Replizierlack. Wie in Fig. 3 angedeutet, ist in einem Bereich 52 eine Oberflächenstruktur in der Replizierschicht 33 durch thermische Replikation mittels Hitze/Druck oder durch UV-Reptikation abgeformt. Bei der Oberflächenstruktur 43 handelt es sich vorzugsweise um eine isotrope oder anisotrope Mattstruktur. Es ist jedoch auch möglich, dass es sich bei der Oberflächenstruktur µm eine andere diffraktive Struktur, beispielsweise um ein Kinegram®, ein Hologramm, eine Kinoform oder eine Beugungsstruktur nullter Ordnung handelt. Weiter ist es auch möglich, dass es sich bei der Oberflächenstruktur um ein lineares oder gekreuztes Sinusgitter oder ein Blaze-Gitter, aber auch um eine linsenartige Struktur, eine Makrostruktur oder eine Kombination aus den genannten Strukturen handelt.

Auf die Replikationsschicht 33 wird die metallische Reflexionsschicht 34 aufgebracht. Wie in Fig. 4 angedeutet wird, ist die metallische Reflexionsschicht 34 hierbei in einem Bereich 40 partiell lediglich in ersten Zonen 41 vorgesehen und in zweiten Zonen 42 nicht vorgesehen. Die metallische Reflexionsschicht 34 hat eine Dicke von 20 nm bis 100 nm und erscheint damit für den menschlichen Betrachter im Auflicht betrachtet opak. Die Anordnung und Ausgestaltung der ersten Zonen 41 und zweiten Zonen 42 ist hierbei wie die Anordnung der ersten Zonen 21 und der zweiten Zonen 22 in dem Ausführungsbeispiel nach Fig. 3 gewählt. Anstelle eines in Form eines Symbols "€" ausgeformten Musterbereichs 23 ist hier ein in Form eines Kreuzes ausgeformter Musterbereich 51 vorgesehen, in dem, wie bereits oben erläutert, die Beabstandung aufeinander folgender zweiter Zonen 42 gegenüber der Beabstandung aufeinander folgender zweiter Zonen 42 in dem Hintergrundbereich um 5 bis 30 % unterschiedlich gewählt ist, d.h. die Transmission im Musterbereich kann relativ zum Hintergrundbereich entweder erhöht oder erniedrigt sein. Die Darstellung in Fig. 4 ist hierbei insbesondere in Bezug auf die Anzahl der ersten Zonen 41 und zweiten Zonen 42 in den Bereichen 40, 51, 53, 52 und 54 nicht maßstäblich gewählt, d.h. in diesen Bereichen sind um Größenordnungen mehr Zonen 41 und 42 angeordnet als dies in Fig. 4 verdeutlicht ist.

Auf die metallische Reflexionsschicht 34 ist partiell die Dekorschicht 35 aufgebracht. Die Dekorschicht 35 ist hierbei lediglich in dem von dem Bereich 53 überdeckten ersten Zonen 41 vorgesehen, ist also lediglich in den in der Fig. 4 verdeutlichten Bereichen 45 vorgesehenen. Die Dekorschicht 35 wird hierzu lediglich in den Bereichen 45 auf die metallische Reflexionsschicht 34 aufgebracht. Weiter ist es auch möglich, dass die Dekorschicht 35 in dem Bereich 53 vollflächig auf die metallische Reflexionsschicht 34 aufgebracht wird, beispielsweise aufgedruckt wird, und anschließend partiell in den Zonen 42, vorzugsweise zusammen mit dem Bereich der metallischen Reflexionsschicht 34 in den Zonen 42 wieder entfernt wird. Bei der Dekorschicht 35 handelt es sich um eine farbige Lackschicht, vorzugsweise mit einer Dicke zwischen 2 und 3 µm. Es ist jedoch auch möglich, dass es sich bei der Dekorschicht 35 ebenfalls um ein Dünnfilmschichtsystem oder um eine vernetzte, cholesterische Flüssigkristallschicht oder eine optisch variable Pigmente aufweisende Schicht handelt. Die Dekorschicht 35 kann somit beispielsweise Flüssigkristall-Pigmente oder Dünnfilmschicht-Pigmente, aber auch lumineszierende oder thermochrome Pigmente enthalten.

Die Schutzlackschicht 36 hat eine Dicke von ca. 1 bis 5 µm. Auf diese Schicht könnte auch verzichtet werden. Die Kleberschicht 37 besteht vorzugsweise aus einem thermisch aktivierbaren Kleber und besitzt eine Schichtdicke von 1 bis 5 µm. Es ist auch möglich, dass die Kleberschicht 37 aus einem UV-aktivierbaren Kleber oder aus einem Kaltkleber besteht. Auf die Kleberschicht 37 kann auch verzichtet werden. Weiter ist es auch möglich, dass das Sicherheitselement 3 noch weitere Dekorschichten aufweist, die wie die Dekorschichten 32 und 35 ausgestaltet sein können, oder auch sonstige weitere Schichten enthält. Die Schichten des Sicherheitselements 31 sind hierbei so ausgestaltet, dass im Bereich 40 des Sicherheitselements 3 dem menschlichen Betrachter einen transparenten oder semi-transparenten Eindruck vermittelt wird. Dies bedeutet, dass sämtliche Schichten des Sicherheitselements 3 im Bereich 40 für einen menschlichen Betrachter transparent oder semi-transparent sind.

Bei Betrachtung des Sicherheitselements 3 durch einen menschlichen Betrachter zeigen sich diesem in Abhängigkeit von der Betrachtungssituation folgende Informationen:

Bei Betrachtung des Sicherheitselements 3 von Seiten der Trägerfolie 31 im Auflicht zeigt sich im Bereich 54 der durch das Dünnfilmschichtsystem der Dekorschicht 32 generierte Farbwechseleffekt. Dem Betrachter zeigt sich so eine erste Information, welche durch die Formgebung des Bereiches 54 und den durch das Dünnfilmschichtsystem bestimmten Farbwechseleffekt bestimmt ist.

In dem Bereich 52 zeigt sich der durch die Oberflächenstruktur 43 bestimmte optische Effekt, beispielsweise ein metallisch mattes Erscheinungsbild, welches von dem umgebenden Hintergrund deutlich hervortritt. Dem Betrachter zeigt sich so eine zweite Information, welche durch die Formgebung des Bereiches 52 und durch die Oberflächenstruktur 43 bestimmt ist.

Wird das Sicherheitselement 3 von dem menschlichen Betrachter von der Seite der Kleberschicht 37 betrachtet, so zeigt sich in dem Bereich 53 der von der Dekorschicht 35 generierte optische Effekt. Wird als Dekorschicht 35 eine farbige Lackschicht verwendet, so unterscheidet sich der Bereich 53 von dem umgebenden Bereich durch die Einfärbung in dieser Farbe. Wird als Dekorschicht 35 eine Dünnfilmschicht oder ein mit optisch variablen Pigmenten versetzte Lackschicht verwendet, so zeigt sich in dem Bereich 53 ein entsprechender Farbwechseleffekt. Dem menschlichen Betrachter zeigt sich so eine dritte Information, die von der Formgebung des Bereichs 53 sowie von dem Material der Dekorschicht 35 bestimmt wird. Weiter zeigt sich bei Betrachtung von Seiten der Klebeschicht 37 in dem Bereich 54 auch der von dem Dünnfilmschichtsystem der Dekorschicht 32 generierte optische Eindruck, also ebenfalls die erste Information.

In Durchlichtbetrachtung erscheint der Bereich 51 dunkler/heller als der umgebende Bereich. Es wird so dem menschlichen Betrachter bei Durchlichtbetrachtung eine vierte Information vermittelt, welche durch die Formgebung des Musterbereichs 51 bestimmt wird. Weiter ist es auch möglich, dass sich für den menschlichen Betrachter bei Durchlichtbetrachtung in dem Bereich 52 zusätzlich noch der von der Oberflächenstruktur 43 generierte optische Effekt in abgeschwächter Form zeigt. Dies kann dadurch vermieden werden, dass die Oberflächenstruktur 43 nur im Bereich der von dem Bereich 52 überdeckten ersten Zonen 41 abgeformt wird.

Wie oben aufgezeigt, werden dem menschlichen Betrachter somit von dem Sicherheitselement 3 je nach Betrachtungssituation vollständig unterschiedliche Informationen vermittelt, wodurch das Sicherheitselement 3 ein klar erkennbares und nur schwer nachzuahmendes Sicherheitsmerkmal bereitstellt.

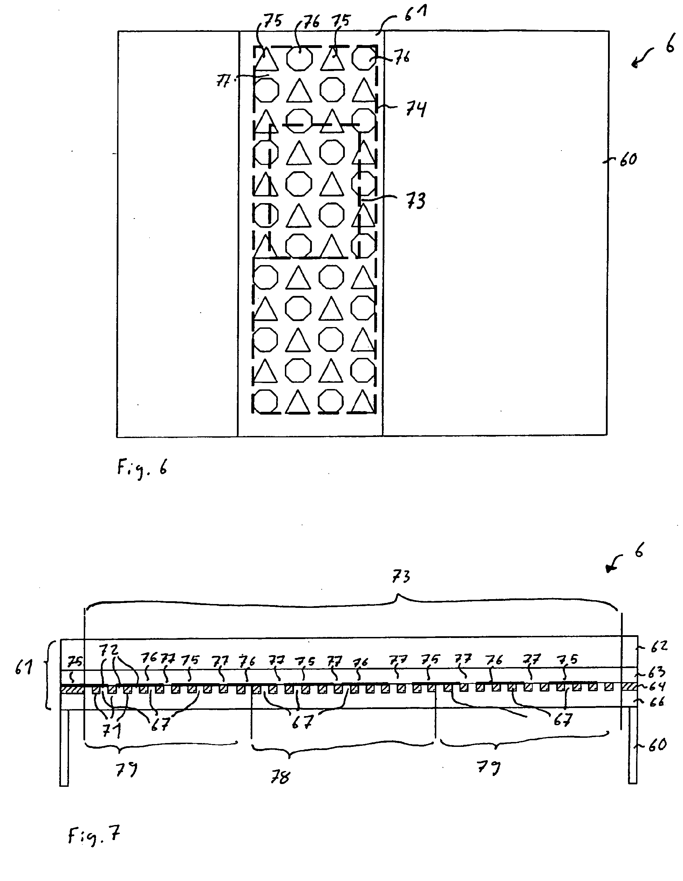

Im Folgenden wird ein weiteres Ausführungsbeispiel der Erfindung anhand der Figuren Fig. 6 und Fig. 7 erläutert. Fig. 6 zeigt eine Draufsicht eines Ausschnitts eines Sicherheitsdokuments 6, bei dem es sich beispielsweise um ein Wertdokument wie eine Banknote handelt. Fig. 7 zeigt eine schematische, nicht maßstabsgetreue Schnittdarstellung eines Ausschnitts des Sicherheitsdokuments 6.

Das Sicherheitsdokument 6 weist ein Trägersubstrat 60 und ein auf das Trägersubstrat 60 appliziertes Folienelement 61 auf. Bezüglich der Ausgestaltung des Sicherheitsdokuments 6 sowie der Wahl der für das Trägersubstrat 60 verwendeten Materialien wird auf die diesbezüglichen Ausführungen nach Fig. 1 verwiesen. Das Folienelement 61 hat vorzugsweise eine streifenförmige Form, vorzugsweise mit einer Streifenbreite im Bereich von 4 bis 30 mm. Das Folienelement 61 weist einen ersten Bereich 73 und einen zweiten Bereich 74 auf, der selbst wiederum mehrere musterförmig ausgeformte Unterbereiche 75 und 76 und einen diese Unterbereiche umgebenden Hintergrundbereich 77 umfasst. Das Trägersubstrat 60 weist ebenso wie das Trägersubstrat 10 nach Fig. 1 eine fensterförmige Durchbrechung oder einen entsprechend transparenten Bereich auf, in dem eine Betrachtung des Folienelements 61 sowohl von Seiten der Oberseite als auch - durch die Durchbrechung - von Seiten der Rückseite möglich ist. Das Folienelement 61 ist nun so auf dem Trägersubstrat 60 positioniert, dass der erste Bereich 73 des Folienelements 61 im Bereich dieser fensterförmigen Durchbrechung bzw. des transparenten Bereiches des Trägersubstrats 60 angeordnet ist, sodass der erste Bereich des Folienelements 73 sowohl von der Vorderseite als auch von der Rückseite des Sicherheitsdokuments 60 betrachtet werden kann. Das Folienelement 61 ist weiter im Bereich 73 so ausgestaltet, dass es für den menschlichen Betrachter im Durchlicht transparent oder semitransparent erscheint und sich im Auflicht und im Durchlicht ein unterschiedliches optisches Erscheinungsbild zeigt. Das Folienelement 61 ist nun im Bereich der fensterförmigen Durchbrechung wie in Fig. 7 dargestellt ausgebildet. Das Folienelement 61 weist eine transparente Trägerfolie 62, eine Replizierschicht 63, eine metallische Reflexionsschicht 64 und eine Schutzlackschicht 66 auf. Im zweiten Bereich 73 bestehen hierbei sämtliche Schichten des Folienelements 61, bis auf die metallische Reflexionsschicht 64, aus einem transparenten Material, um somit im Durchlicht einen transparenten oder semitransparenten optischen Eindruck zu ermöglichen.

Bezüglich der Ausgestaltung dieser Schichten wird auf die Ausführungen zu den entsprechenden Schichten nach Fig. 1, Fig. 2 und Fig. 4 verwiesen.

Die metallische Reflexionsschicht 64 ist in dem Bereich 73 partiell ausgestaltet und lediglich in dem Bereich einer Vielzahl erster Zonen 71 vorgesehen. Der Bereich 73 ist somit in eine Vielzahl erster Zonen 71 und zweiter Zonen 72 unterteilt, wobei in den ersten Zonen 71 die metallische Reflexionsschicht vorgesehen ist und in den zweiten Zonen 72 die metallische Reflexionsschicht nicht vorgesehen ist. Erste Zonen 71 und zweite Zonen 72 sind - wie in Fig. 7 gezeigt - abwechselnd vorgesehen. Weiter ist der Bereich 73 in einen Musterbereich 78 und in einen den Musterbereich 78 mindestens teilweise umschließenden Hintergrundbereich 79 unterteilt. Jede der ersten und zweiten Zonen weist innerhalb des Bereichs 73 eine kleinste Abmessung von weniger als 300 µm auf, wobei die Anordnung und Ausformung der ersten und zweiten Zonen so gewählt ist, dass sich der Flächenanteil der ersten Zonen 71 an der Gesamtfläche des Musterbereichs 78 von dem Flächenanteil der ersten Zonen 71 an der Gesamtfläche des Hintergrundbereichs 79 um 5 bis 30 % unterscheidet. Weiter ist in der Replikationsschicht 63 innerhalb des ersten Bereichs 73 zumindest in einem Teil, der von den ersten Zonen 71 belegten Fläche des Hintergrundbereichs 79 und des Musterbereichs 78 eine Oberflächenstruktur 67 abgeformt und hierdurch entsprechend auch in der auf die Replikationsschicht 63 aufgebrachten metallischen Reflexionsschicht 64 abgeformt. Die Oberflächenstruktur 67 lenkt das einfallende Licht zumindest teilweise aus dem Spiegelreflex der von dem Folienelement 61 aufgespannten Ebene ab.

Die Strukturierung der metallischen Reflexionsschicht 64 kann hierbei insbesondere wie die Strukturierung der metallischen Reflexionsschichten 13 und 34 nach den Figuren 2, 3 und 4 erfolgen. Weiter ist es aufgrund der bei diesem Ausführungsbeispiel weiter vorgesehenen Oberflächenstruktur 67 auch möglich, zusätzlich Strukturierungsvarianten der metallischen Reflexionsschicht 64 bei der Herstellung des Folienelements 61 zu realisieren. So ist es möglich, dass die ersten Zonen 71 nicht finienförmig ausgeformt sind und auch nicht an einem Linienraster ausgerichtet sind. Vorzugsweise sind hier jedoch ebenfalls die Flächenschwerpunkte aufeinander folgende erste Zonen 71 weniger als 300 µm voneinander beabstandet, vorzugsweise weniger als 100 µm voneinander beabstandet. Weiter beträgt nicht nur die kleinste, sondern auch die größte Abmessung der ersten Zonen 71 vorzugsweise weniger als 300 µm, weiter bevorzugt weniger als 200 µm. Die Ausrichtung der ersten Zonen 71 anhand eines zweidimensionalen, auch transformierten Raster ist ebenso möglich wie eine zufällig oder pseudo-zufällige Anordnung der ersten Zonen 71, durch welche im Weiteren auch Störeffekte vermieden werden können. Bei dem hier gezeigten Ausführungsbeispiel liegt die mittlere Flächenbelegung durch die ersten Zonen bezogen auf eine Abmessung von 300 µm * 300 µm in dem Musterbereich 78 vorzugsweise in einem Bereich von 40 bis 70 %, in dem Hintergrundbereich von 60 bis 90 %, wobei weiter die minimale mittlere Flächenbelegung durch die ersten Zonen in dem Musterbereich 78 und dem Hintergrundbereich 79 sich um 5 bis 30 %, bevorzugt um 5 bis 20 % unterscheidet und sich die maximale mittlere Flächenbelegung in dem Musterbereich 78 und dem Hintergrundbereich 79 sich um 5 % bis 30 %, bevorzugt um 15 % bis 30 % unterscheidet.

Bei der Oberflächenstruktur 67 handelt es sich um eine diffraktive Oberflächenstruktur, die bereichsweise eine unterschiedliche Spatialfrequenz und Ausrichtung der Gitterlinien aufweist. Vorzugsweise handelt es sich bei der Oberflächenstruktur 67 um ein Kinegram®. Wie in Fig. 7 gezeigt, ist die Oberflächenstruktur 76 nicht in der gesamten, von den ersten Zonen 71 belegten Flächen des ersten Bereichs 73 vorgesehen. Eine vollständige Belegung der ersten Zonen 71 durch die Oberflächenstrukturen 76 ist möglich. Vorzugsweise ist die Oberflächenstruktur 67 innerhalb des ersten Bereichs 72 in zumindest 50 % der von den ersten Zonen 71 belegten Fläche in die Reflexionsschicht 64 abgeformt und hierbei innerhalb des Hintergrundbereichs in zumindest 30 % der von den ersten Zonen belegten Flächen und in dem Musterbereich in zumindest 30 % der von den ersten Zonen belegten Flächen abgeformt. Vorzugsweise ist der Flächenanteil der Bereich der Reflexionsschicht 64, in denen die Oberflächenstruktur 67 in erste Zonen 71 abgeformt ist, im Hintergrundbereich und im Musterbereich identisch oder differieren um nicht mehr als 20 %. Weiter ist eine möglichst gleichmäßige Flächenbelegung des Musterbereichs und des Hintergrundbereichs durch Bereiche von ersten Zonen anzustreben, in denen die Oberflächenstruktur 67 in die Reflexionsschicht abgeformt ist, und zwar unabhängig von der Belegung des Musterbereichs 78 bzw. des Hintergrundbereichs 79 mit ersten Zonen 71. Die mittlere Flächenbelegung, vorzugsweise bezogen auf eine Abmessung von 300 µm * 300 µm durch diese Bereiche sollte um nicht mehr als 30 % divergieren.

Wie in Fig. 6 und Fig. 7 angedeutet, weist der zweiten Bereich 74 eine Vielzahl von ersten Unterbereichen 75 und zweiten Unterbereichen 76 auf, die je unterschiedlich ausgeformt sind. Die Unterbereiche 75 und 76 besitzen hierbei vorzugsweise jeweils eine Abmessung von 0,1 bis 10 mm. In den Unterbereiche 75 und 76 sind unterschiedliche Oberflächenstrukturen als Oberflächenstruktur 67 in die Reflexionsschicht 64 abgeformt, sodass die Unterbereiche 75 und 76 jeweils einen unterschiedlichen, vorzugsweise optisch variablen Eindruck vermitteln. In den Unterbereichen 75 und 76 sind so bei dem Ausführungsbeispiel von Fig. 6 unterschiedliche diffraktive Strukturen abgeformt. Es ist jedoch auch möglich, dass die in den Unterbereichen 75 und 76 abgeformten Strukturen aus Mattstrukturen, diffraktive Strukturen, asymmetrische Strukturen und linsenförmige Strukturen ausgewählt sind oder von einer Kombination dieser Strukturen gebildet werden. So ist es beispielsweise möglich, dass in den Unterbereichen 75 und 76 Oberflächenstrukturen abgeformt sind, die unterschiedlichen Strukturtypen zuzuordnen sind, beispielsweise eine Mattstruktur in den Bereichen 75 und ein einen optische variablen Effekt zeigendes Kinegram® in dem Unterbereich 76. Der die Unterbereiche 75 und 76 umgebende Hintergrundbereich 77 ist in dem Ausführungsbeispiel nach den Figuren 6 und 7 nicht mit der Oberflächenstruktur 77 belegt. Es ist jedoch auch möglich, dass in dem Hintergrundbereich 77 ebenfalls eine der oben geschilderten Oberflächenstrukturen in die Reflexionsschicht 64 abgeformt ist, welche sich von den Oberflächenstrukturen unterscheidet, die in den Unterbereichen 75 und 76 abgeformt sind. Weiter ist es auch möglich, dass neben den Unterbereichen 75 und 76 noch weitere Unterbereiche in dem Bereich 74 vorgesehen sind, in denen ebenfalls eine sich von der Oberflächenstruktur in den Bereichen 75 und 76 unterscheidende weitere Oberflächenstruktur abgeformt ist.

Im Weiteren ist es auch möglich, dass in den Unterbereichen 75 und 76 die gleiche Oberflächenstruktur in die Reflexionsschicht 64 abgeformt ist, in dem Hintergrundbereich 77 jedoch keine Oberflächenstruktur oder eine sich von dieser Oberflächenstruktur unterscheidende Oberflächenstruktur in die Reflexionsschicht 64 abgeformt ist. Der Umfangsrand der Unterbereiche 75 und 76 tritt so vor dem Hintergrundbereich 77 hervor und kann vom menschlichen Betrachter als unterschiedliche optisch variable Information wahrgenommen werden.

Wie in Fig. 6 angedeutet, sind die Unterbereiche 75 und 76 in einem regelmäßigen, repetitiven Muster angeordnet, welches den Bereich 73 vollständig überdeckt. Durch diese repetitive Anordnung und die hierdurch bewirkte Beeinflussung des menschlichen Betrachters wird eine besonders gute Verschleierung der ersten Information in der Auflichtbetrachtung bewirkt.

Bei Betrachtung des Sicherheitsdokuments 6 in Auflichtbetrachtung von Seiten der Vorderseite zeigt sich so im gesamten Bereich 74 das in Fig. 6 angedeutete, relativ einfache repetitive Muster, welches weiter ein optisch variables Erscheinungsbild bietet. Bei Durchlichtbetrachtung zeigt sich im Bereich 73 für den menschlichen Betrachter überraschend die in Form der Gestaltung des Musterbereichs 78 bereitgestellte Information, beispielsweise ein komplexes Abbild eines menschlichen Kopfes vor einem hellen Hintergrund oder umgekehrt.

Es ist weiter auch möglich, dass das oben im Bezug auf die Figuren 6 und 7 beschriebene Ausführungsbeispiel auch mit dem Ausführungsbeispiel nach den Figuren Fig. 4 und Fig. 5 kombiniert wird und so neben den in Fig. 7 gezeigten Schichten beispielsweise noch die weitere Schicht nach Fig. 4 aufweist, um so bei Betrachtung im Auflicht und im Durchlicht von verschiedenen Seiten jeweils noch weitere unterschiedliche, sich vorzugsweise überlagernde Informationen zu zeigen.

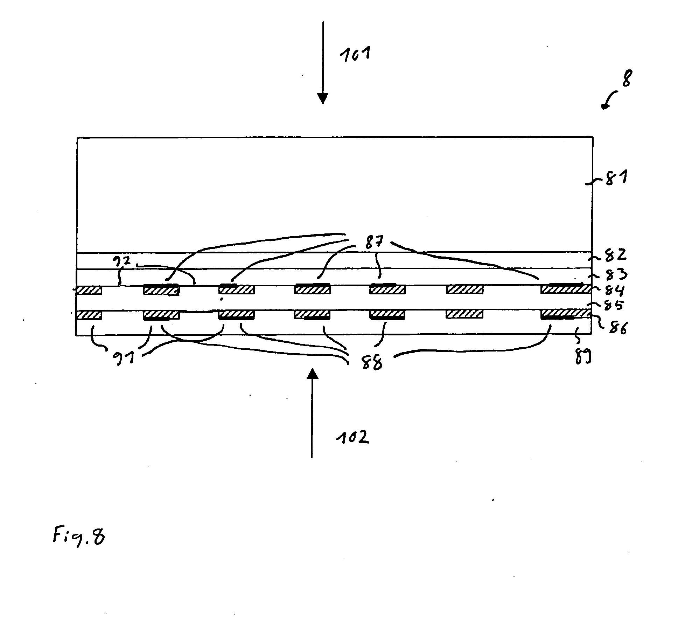

Weiter ist es auch möglich, dass das Ausführungsbeispiel nach den Figuren Fig. 6 und 7, das Ausführungsbeispiel nach den Figuren Fig. 1 bis Fig. 3 oder das Ausführungsbeispiel nach den Figuren Fig. 4 und Fig. 5 noch zusätzlich wie nachfolgend anhand von Fig. 8 erläutert ausgestaltet ist.

Fig. 8 zeigt ein Sicherheitselement 8 in Form eines Folienkörpers, welcher eine transparente Trägerfolie 81, eine Haftvermittlungsschicht, Ablöseschicht oder transparente Dekorschicht 82, eine erste Replizierschicht 83, eine erste metallische Reflexionsschicht 84, eine zweite Replizierschicht 85, eine zweite metallische Reflexionsschicht 86 und eine Schutzlackschicht 89 aufweist. Bezüglich der Ausgestaltung dieser Schichten wird auf die diesbezüglichen Ausführungen nach den Figuren Fig. 1 bis Fig. 7 verwiesen. Die Reflexionsschichten 84 und 86 sind, wie oben erläutert, in erste Zonen 91, in denen die Reflexionsschichten vorgesehen sind, und zweite Zonen 92, in denen die Reflexionsschichten nicht vorgesehen ist, unterteilt. Die Reflexionsschichten 84 und 86 sind jeweils deckungsgleich in den ersten Zonen 91 vorgesehen und in den zweiten Zonen 92 nicht vorgesehen. Bezüglich der Ausformung der ersten Zonen 91 in dem Hintergrundbereich und in dem Musterbereich wird auf die vorgehenden Ausführungen nach Fig. 1 bis Fig. 7 verwiesen. Weiter ist in der ersten Reflexionsschicht 84 eine erste Oberflächenstruktur 87 und in der zweiten Reflexionsschicht 86 eine zweite Oberflächenstruktur 88 zumindest bereichsweise in die ersten Zonen 91 abgeformt, wie dies beispielhaft in Fig. 8 gezeigt ist. Bezüglich der Auswahl der Oberflächenstrukturen 87 und 88 sowie der Formgebung der von diesen Oberflächenstrukturen belegten Bereiche wird auf die vorgehenden Ausführungen insbesondere nach Fig. 7 verwiesen.

Bei Betrachtung des Sicherheitselements 8 von einer ersten Seite 101 im Auflicht zeigt sich so die von den Oberflächenstrukturen 87 generierte optische Information. Bei Betrachtung von der gegenüberliegenden Seite 102 im Auflicht zeigt sich die von den Oberflächenstrukturen 88 generierte optische Information, beispielsweise die in Fig. 6 angedeutete Darstellung. Bei Betrachtung des Sicherheitselements 8 im Durchlicht zeigt sich die von der Gestaltung des Musterbereichs bestimmte optische Information, beispielsweise eine Darstellung eines menschlichen Kopfes, sowohl bei Betrachtung von der Seite 101 als auch bei Betrachtung von der Seite 102.

## Patentansprüche

1. Sicherheitselement (1, 3) in Form eines mehrschichtigen Folienkörpers zur Betrachtung im Auflicht und im Durchlicht, wobei das Sicherheitselement (1, 3) in einem für den menschlichen Betrachter im Durchlicht transparenten oder semi-transparenten ersten Bereich (20, 40) eine Trägerfolie (12, 31) und eine partielle metallische Reflexionsschicht (13, 34) aufweist,
**dadurch gekennzeichnet,**
**dass** in dem ersten Bereich (20, 40) erste Zonen (21, 41), in denen die metallische Reflexionsschicht vorgesehen ist, und zweite Zonen (22, 42), in denen die metallische Reflexionsschicht nicht vorgesehen ist, abwechselnd mit einer Beabstandung der Flächenschwerpunkte aufeinander folgende erste Zonen (21, 41) von weniger als 300 µm angeordnet sind, dass der erste Bereich (20, 40) mindestens einen Musterbereich (23) mit Abmessungen > 300 µm und einen an den Musterbereich (23) angrenzenden und den Musterbereich (23) zumindest teilweise umschließenden Hintergrundbereich (24) aufweist, wobei sich die Beabstandung aufeinander folgender zweiter Zonen (22, 42) in dem Musterbereich gegenüber der Beabstandung aufeinander folgender zweiter Zonen (22, 42) in dem Hintergrundbereich (24) um 5 bis 30 % unterscheidet, wodurch eine durch die Formgebung des Musterbereichs (23) bestimmte Information für den menschlichen Betrachter im Durchlicht sichtbar wird.

2. Sicherheitselement (1,3) nach Anspruch 1,
**dadurch gekennzeichnet,**
**dass** die ersten Zonen (21, 41) eine linien- oder bandförmige Formgebung besitzen, dass im ersten Bereich (20, 40) die Gesamtfläche der ersten Zone (21,41) einen Flächenanteil von weniger als 50 % der Gesamtfläche der ersten und zweiten Zone (21, 22; 41,42) belegt, vorzugsweise von weniger als 10 % belegt und dass die ersten Zonen (21, 41) im wesentlichen parallel zueinander angeordnet sind, wobei die Längsachsen der ersten Zonen in Richtung einer ersten Koordinatenachse eines von der ersten Koordinatenachse und einer hierzu unterschiedlichen zweiten Koordinatenachse in dem ersten Bereich (20, 40) aufgespannten Koordinatensystems orientiert sind.

3. Sicherheitselement (1, 3) nach Anspruch 2,
**dadurch gekennzeichnet,**
**dass** sich erste Zonen (21, 41) über die Grenze zwischen Musterbereich (23) und Hintergrundbereich (24) erstrecken und somit die jeweilige erste Zone sowohl im Musterbereich als auch im Hintergrundbereich vorgesehen ist.

4. Sicherheitselement (1, 3) nach einem der vorhergehenden Ansprüche,
**dadurch gekennzeichnet,**
**dass** in den ersten Zonen (21, 41) eine erste Oberflächenstruktur, insbesondere eine isotrope oder anisotrope Mattstruktur in die Oberfläche der Reflexionsschicht abgeformt ist.

5. Sicherheitselement (6, 8) in Form eines mehrschichtigen Folienkörpers zur Betrachtung im Auflicht und im Durchlicht, wobei das Sicherheitselement (6, 8) in einem für den menschlichen Betrachter im Durchlicht transparenten oder semitransparenten ersten Bereich (73) eine Trägerfolie (62, 81) und eine partielle metallische Reflexionsschicht (64, 84, 86) aufweist,
**dadurch gekennzeichnet,**
**dass** in dem ersten Bereich (73) erste Zonen (71, 91), in denen die metallische Reflexionsschicht vorgesehen ist, und zweite Zonen (72, 92), in denen die metallische Reflexionsschicht nicht vorgesehen ist, abwechselnd vorgesehen sind, wobei jede der ersten und zweiten Zonen (71, 91; 72, 92) innerhalb des ersten Bereichs (73) eine kleinste Abmessung von weniger als 300 µm aufweist, und dass der erste Bereich (73) mindestens einen Musterbereich (78) mit Abmessungen größer als 300 µm und mindestens einen an den Musterbereich angrenzenden und den Musterbereich zumindest teilweise umschließenden Hintergrundbereich (79) aufweist, wobei innerhalb des ersten Bereichs (73) in zumindest einem Teil der von den ersten Zonen (71, 91) belegten Fläche des Hintergrundbereichs (79) und des Musterbereichs (78) eine erste Oberflächenstruktur (67, 87) in die Reflexionsschicht (64, 84) abgeformt ist, welche das einfallende Licht zumindest teilweise aus dem Spiegelreflex der von dem Folienkörper aufgespannten Ebene ablenkt und der Flächenanteil der ersten Zonen (71, 91) an der Gesamtfläche jedes Musterbereichs (78) sich von dem Flächenanteil der ersten Zonen (71, 91) an der Gesamtfläche jedes Hintergrundbereichs (79) um 5 bis 30 % unterscheidet, wodurch eine durch die Formgebung des Musterbereichs (78) bestimmte erste Information für den menschlichen Betrachter im Durchlicht sichtbar wird.

6. Sicherheitselement (6) nach einem der Ansprüche 4 bis 5,
**dadurch gekennzeichnet,**
**dass** die erste Oberflächenstruktur (67) in einem den ersten Bereich (73) zumindest teilweise überdeckenden zweiten Bereich (74) vorgesehen ist und dass der zweite Bereich zwei oder mehr Unterbereiche (75, 76) aufweist, in denen als erste Oberflächenstruktur (76) unterschiedliche Oberflächenstrukturen in die Reflexionsschicht (64) abgeformt sind.

7. Sicherheitselement (6) nach Anspruch 6,
**dadurch gekennzeichnet,**
**dass** der zweite Bereich (74) den ersten Bereich (73) überragt.

8. Sicherheitselement (6) nach einem der Ansprüche 4 bis 7,
**dadurch gekennzeichnet,**
**dass** der zweite Bereich (74) eine Vielzahl erster gleichförmig ausgeformter Unterbereiche (75) und eine Vielzahl zweiter gleichförmig ausgeformter Unterbereiche (76) umfaßt, wobei in den ersten Unterbereichen (75) und in den zweiten Unterbereichen (76) unterschiedliche Oberflächenstrukturen in die Reflexionsschicht (64) abgeformt sind und/oder die ersten Unterbereiche (75) und die zweiten Unterbereiche unterschiedliche Formgebung besitzen, und die ersten und zweiten Unterbereiche sowie optional noch weitere Unterbereiche in Form eines repetitiven Musters angeordnet sind.

9. Sicherheitselement nach einem der Ansprüche 4 bis 8,
**dadurch gekennzeichnet,**
**dass** das Sicherheitselement (8) eine von der metallischen Reflexionsschicht (84) beabstandete weitere partielle metallische Reflexionsschicht (86) aufweist, und dass die weitere metallische Reflexionsschicht (86) deckungsgleich zur ersten metallischen Reflexionsschicht (84) in den ersten Zonen (91) vorgesehen ist und in den zweiten Zonen (94) nicht vorgesehen ist, und dass in die Oberfläche der weiteren metallischen Reflexionsschicht eine zweite Oberflächenstruktur (88) abgeformt ist und dass die erste Oberflächenstruktur (84) eine vierte Information und die zweite Oberflächenstruktur (86) eine sich von der vierten Information unterscheidende fünfte Information bereitstellt, so dass bei Betrachtung von Seiten (101) der Reflexionsschicht (84) im Auflicht die vierte Information, bei Betrachtung von Seiten (102) der weiteren Reflexionsschicht (86) die fünfte Information und bei Betrachtung im Durchlicht die erste Information sichtbar wird.

10. Sicherheitselement (1, 3) nach einem der vorhergehenden Ansprüche,
**dadurch gekennzeichnet,**
**dass** in einem innerhalb des ersten Bereichs (40) angeordneten zweiten Bereich (52, 54) eine erste Oberflächenstruktur (43) in einer Replizierschicht (33) des Sicherheitselements abgeformt oder eine erste Dekorschicht (32) in dem Sicherheitselement vorgesehen ist, welches eine vierte Information bereitstellt.

11. Sicherheitselement (1,3) nach Anspruch 10,
**dadurch gekennzeichnet,**
**dass** die Replizierschicht (33) bzw. die erste Dekorschicht (32) zwischen der metallischen Reflexionsschicht (34) und einer ersten Oberfläche des Sicherheitselements angeordnet ist, das in einem innerhalb des ersten Bereichs (40) angeordneten dritten Bereichs (53) eine zweite Oberflächenstruktur in einer Replizierschicht des Sicherheitselements abgeformt oder eine zweite Dekorschicht (35) in dem Sicherheitselement vorgesehen ist, welche eine fünfte Information (53) bereitstellt, wobei die Replizierschicht bzw. die zweite Dekorschicht (35) zwischen der metallischen Reflexionsschicht (34) und einer zweiten Oberfläche des Sicherheitselements angeordnet ist, so dass bei Betrachtung von Seiten der ersten Oberfläche im Auflicht die vierte Information und bei Betrachtung von der Seite der zweiten Oberfläche im Auflicht die fünfte Information sichtbar ist.

12. Sicherheitselement (1, 3) nach Anspruch 10,
**dadurch gekennzeichnet,**
**dass** die erste Oberflächenstruktur bzw. die erste Dekorschicht in den von dem zweiten Bereich überdeckten zweiten Zonen, nicht jedoch in den von dem zweiten Bereich überdeckten ersten Zonen abgeformt bzw. vorgesehen ist, sodass die vierte Information im Durchlicht sichtbar ist.

13. Sicherheitselement (1, 3) nach Anspruch 10 oder Anspruch 12,
**dadurch gekennzeichnet,**
**dass** die erste Oberflächenstruktur bzw. die erste Dekorschicht in den von dem zweiten Bereich überdeckten zweiten Zonen abgeformt bzw. vorgesehen ist, dass in einem innerhalb des ersten Bereiches angeordneten dritten Bereich eine zweite Oberflächenstruktur in einer Replizierschicht des Sicherheitselements abgeformt oder eine zweite Dekorschicht in dem Sicherheitselement vorgesehen ist, welche eine fünfte Information bereitstellt, wobei die Replizierschicht bzw. die zweite Dekorschicht zwischen der metallischen Reflexionsschicht und einer zweiten Oberfläche des Sicherheitselements angeordnet ist, sodass bei Betrachtung von Seiten der zweiten Oberfläche im Auflicht die fünfte Information und bei Betrachtung im Durchlicht die vierte Information sichtbar ist.

14. Sicherheitselement (1, 3) nach Anspruch 13,
**dadurch gekennzeichnet,**
**dass** in einem innerhalb des ersten Bereiches angeordneten vierten Bereich eine dritte Oberflächenstruktur in einer Replizierschicht des Sicherheitselements abgeformt oder eine dritte Dekorschicht in dem Sicherheitselement vorgesehen ist, welche eine sechste Information bereitstellt, wobei die Replizierschicht bzw. die dritte Dekorschicht zwischen der metallischen Reflexionsschicht und einer ersten Oberfläche des Sicherheitselements angeordnet ist, sodass bei Betrachtung von Seiten der ersten Oberfläche im Auflicht die fünfte Information und bei Betrachtung von Seiten der zweiten Oberfläche im Auflicht die sechste Information sichtbar ist.

15. Sicherheitselement (1, 3) nach einem der Ansprüche 10 bis 14,
**dadurch gekennzeichnet,**
**dass** sich der zweite mit dem dritten Bereich, der dritte mit dem vierten Bereich oder der zweite, der dritte und der vierte Bereich überschneiden.

## Claims

1. Security element (1, 3) in the form of a multilayer film body for viewing in reflected light and in transmitted light, the security element (1, 3) having in a first region (20, 40), which is transparent or semitransparent in transmitted light to the human viewer, a carrier film (12, 31) and a partial metallic reflection layer (13, 34), **characterized in that** in the first region (20, 40) first zones (21, 41), in which the metallic reflection layer is present, and second zones (22, 42), in which the metallic reflection layer is not present, there are alternately arranged with a spacing of the area centroids consecutive first zones (21, 41) of less than 300 µm, and **in that** the first region (20, 40) has at least one pattern region (23) with dimensions > 300 µm, and a background region (24) which adjoins the pattern region (23) and encloses the pattern region (23) at least partially, the spacing of consecutive second zones (22, 42) differing in the pattern region by comparison with the spacing of consecutive second zones (22, 42) in the background region (24) by 5 to 30%, as a result of which information determined by the shaping of the pattern region (23) becomes visible in transmitted light to the human viewer.

2. Security element (1, 3) according to Claim 1, **characterized in that** the first zones (21, 41) are of linear or strip shape, **in that** in the first region (20, 40) the total area of the first zone (21, 41) covers an area fraction of less than 50% of the total area of the first and second zones (21, 22; 41, 42), preferably of less than 10% and **in that** the first zones (21, 41) are arranged substantially parallel to one another, the longitudinal axes of the first zones being orientated in the direction of a first coordinated axis of a coordinate system defined by the first coordinated axis and a second coordinated axis, differing therefrom, in the first region (20, 40).

3. Security element (1, 3) according to Claim 2, **characterized in that** first zones (21, 41) extend beyond the boundary between the pattern region (23) and background region (24), and so the respective first zone is provided both in the pattern region and in the background region.

4. Security element (1, 3) according to one of the preceding claims, **characterized in that** in the first zones (21, 41) a first surface structure, in particular an isotropic or anisotropic matt structure, is formed in the surface of the reflection layer.

5. Security element (6, 8) in the form of a multilayer film body for viewing in reflected light and in transmitted light, the security element (6, 8) having in a first region (73), which is transparent or semitransparent in transmitted light to the human viewer, a carrier film (62, 81) and a partial metallic reflection layer (64, 84, 86), **characterized in that** in the first region (73) first zones (71, 91), in which the metallic reflection layer is provided, and second zones (72, 92), in which the metallic reflection layer is not provided, are alternately provided, each of the first and second zones (71, 91; 72, 92) having inside the first region(73) a minimum dimension of less than 300 µm, and **in that** the first region (73) has at least one pattern region (78) with dimensions greater than 300 µm, and at least one background region (79) which adjoins the pattern region and encloses the pattern region at least partially, a first surface structure (67, 87) being formed in the reflection layer (64, 84) inside the first region (73) in at least one part of the area covered by the first zones (71, 91), of the background region (79) and of the pattern region (78), which reflection layer deflects the incident light at least partially from the mirror reflection of the plane defined by the film body, and the area fraction of the first zones (71, 91) of the total area of each pattern region (78) differs from the area fraction of the first zones (71, 91) of the total area of each background region (79) of 5 to 30%, as a result of which first information item determined by the shaping of the pattern region (78) becomes visible in transmitted light to the human viewer.

6. Security element (6) according to one of Claims 4 to 5, **characterized in that** the first surface structure (67) is provided in a second region (74) at least partially covering the first region (73), and **in that** the second region has two or more subregions (75, 76) in which different surface structures are formed in the reflection layer (64) as first surface structure (76).

7. Security element (6) according to Claim 6, **characterized in that** the second region (74) overhangs the first region (73).

8. Security element (6) according to one of Claims 4 to 7, **characterized in that** the second region (74) comprises a multiplicity of first uniformly shaped subregions (75) and a multiplicity of second uniformly shaped subregions (76), different surface structures being formed in the reflection layer (64) in the first subregions (75) and in the second subregions (76), and/or the first subregions (75) and the second subregions having different shapes, and the first and second subregions as well as, optionally, also further subregions being arranged in the form of a repetitive pattern.

9. Security element according to one of Claims 4 to 8, **characterized in that** the security element (8) has a further partial metallic reflection layer (86) spaced apart from the metallic reflection layer (84), and **in that** the further metallic reflection layer (86) is provided in a fashion congruent with the first metallic reflection layer (84) in the first zones (91) and not provided in the second zones (94), and **in that** a second surface structure (88) is formed in the surface of the further metallic reflection layer, and **in that** the first surface structure (84) provides a fourth information item and the second surface structure (86) provides a fifth information item differing from the fourth information item, such that the fourth information item becomes visible in the case of viewing from the sides (101) of the reflection layer (84) in reflected light, the fifth information item becomes visible in the case of viewing from the sides (102) of the further reflection layer (86), and the first information item becomes visible in the case of viewing in transmitted light.

10. Security element (1, 3) according to one of the preceding claims, **characterized in that** in a second region (52, 54), arranged inside the first region (40), a first surface structure (43) is formed in a replication layer (33) of the security element, or a first decoration layer (32) which provides a fourth information item in the security element.

11. Security element (1, 3) according to Claim 10, **characterized in that** the replication layer (33) or the first decoration layer (32) is arranged between the metallic reflection layer (34) and a first surface of the security element and **in that** in a third region (53) arranged inside the first region (40), a second surface structure is formed in a replication layer of the security element, or there is provided in the security element a second decoration layer (35) which provides a fifth information item (53), the replication layer or the second decoration layer (35) is arranged between the metallic reflection layer (34) and a second surface of the security element such that the fourth information item becomes visible in the case of viewing from the sides of the first surface in reflected light, and the fifth information item becomes visible in the case of viewing from the side of the second surface in reflected light.

12. Security element (1, 3) according to Claim 10, **characterized in that** the first surface structure or the first decoration layer is formed or provided in the second zones covered by the second region, but not in the first zones covered by the second region, such that the fourth information item is visible in transmitted light.

13. Security element (1, 3) according to Claim 10 or Claim 12, **characterized in that** the first surface structure or the first decoration layer is formed or provided in the second zones covered by the second region, and **in that** in a third region arranged inside the first region a second surface structure is formed in a replication layer of the security element, or there is provided in the security element a second decoration layer which provides a fifth information item, the replication layer or the second decoration layer being arranged between the metallic reflection layer and a second surface of the security element such that the fifth information item is visible in the case of viewing from the sides of the second surface in reflected light, and the fourth information item is visible in the case of viewing in transmitted light.

14. Security element (1, 3) according to Claim 13, **characterized in that** in a fourth region arranged inside the first region a third surface structure is formed in a replication layer of the security element or there is provided in the security element a third decoration layer which provides a sixth information item, the replication layer or the third decoration layer being arranged between the metallic reflection layer and a first surface of the security element such that the fifth information item is visible in the case of viewing from the sides of the first surface in reflected light, and the sixth information item is visible in the case of viewing from the sides of the second surface in reflected light.

15. Security element (1, 3) according to one of Claims 10 to 14, **characterized in that** the second region overlaps with the third region, the third overlaps with the fourth region, or the second, the third and the fourth regions overlap with one another.

## Revendications

1. Elément de sécurité (1, 3) sous la forme d'un corps de feuille multicouche à visualiser sous lumière réfléchie et sous lumière transmise, dans lequel l'élément de sécurité (1, 3) présente dans une première région (20, 40), transparente ou semi-transparente pour l'observateur humain sous lumière transmise, une feuille support (12, 31) et une couche de réflexion métallique partielle (13, 34),
**caractérisé en ce que**
dans la première région (20, 40), des premières zones (21, 41) dans lesquelles la couche de réflexion métallique est prévue, et des deuxièmes zones (22, 42) dans lesquelles la couche de réflexion métallique n'est pas prévue, des premières zones (21, 41) successives de moins de 300 µm sont disposées en alternance avec un espacement des centres de gravité des surfaces, **en ce que** la première région (20, 40) présente au moins une région à dessin (23) avec des dimensions >300 µm et une région de fond (24) adjacente à la région à dessin (23) et entourant la région à dessin (23) au moins en partie, dans lequel l'espacement des deuxièmes zones (22, 42) successives dans la région à dessin est différent de l'espacement des deuxièmes zones (22, 42) successives dans la région de fond (24) de 5 à 30 %, de manière à ce, qu'une information déterminée par la mise en forme de la région à dessin (23) apparaisse pour l'observateur humain sous lumière transmise.

2. Elément de sécurité (1, 3) selon la revendication 1,
**caractérisé en ce que**
les premières zones (21, 41) possèdent une mise en forme en forme ligne ou de bande, **en ce que** dans la première région (20, 40) la surface totale de la première zone (21, 41) occupe une proportion de surface de moins de 50 % de la surface totale des premières et deuxièmes zones (21, 22 ; 41, 42), de préférence de moins de 10 %, et **en ce que** les premières zones (21, 41) sont disposées substantiellement en parallèle les unes aux autres, dans lequel les axes longitudinaux des premières zones sont orientés en direction d'un premier axe de coordonnées d'un système de coordonnées établi à partir du premier axe de coordonnées et d'un deuxième axe de coordonnées différent de celui-ci dans la première région (20, 40).

3. Elément de sécurité (1, 3) selon la revendication 2,
**caractérisé en ce que**
des premières zones (21, 41) s'étendent au-delà de la limite entre la région à dessin (23) et la région de fond (24), et qu'ainsi la première zone respective est prévue aussi bien dans la région à dessin que dans la région de fond.

4. Elément de sécurité (1, 3) selon l'une quelconque des revendications précédentes, **caractérisé en ce que**
dans les premières zones (21, 41), une première structure de surface, en particulier une structure mate isotrope ou anisotrope est moulée dans la surface de la couche de réflexion.

5. Elément de sécurité (6, 8) sous la forme d'un corps de feuille multicouche à visualiser sous lumière réfléchie et sous lumière transmise, dans lequel l'élément de sécurité (6, 8) présente dans une première région (73), transparente ou semi-transparente pour l'observateur humain sous lumière transmise, une feuille support (62, 81) et une couche de réflexion métallique partielle (64, 84, 86),
**caractérisé en ce que**
dans la première région (73), des premières zones (71, 91) dans lesquelles la couche de réflexion métallique est prévue, et des deuxièmes zones (72, 92) dans lesquelles la couche de réflexion métallique n'est pas prévue, sont prévues en alternance, dans lequel chacune des premières et deuxièmes zones (71, 91 ; 72, 92) présente à l'intérieur de la première région (73) une dimension minimale de moins de 300 µm, et **en ce que** la première région (73) présente au moins une région à dessin (78) avec des dimensions supérieures à 300 µm et au moins une région de fond (79) adjacente à la région à dessin et entourant la région à dessin au moins en partie, dans lequel à l'intérieur de la première région (73), dans au moins une partie de la surface occupée par les premières zones (71, 91) de la région de fond (79) et de la région à dessin (78), une première structure de surface (67, 87) est moulée dans la couche de réflexion (64, 84) et dévie la lumière incidente au moins en partie à partir du reflet du plan formé par le corps de feuille, et la proportion de surface des premières zones (71, 91) par rapport à la surface totale de chaque région à dessin (78) diffère de 5 à 30 % de la proportion de surface des premières zones (71, 91) par rapport à la surface totale de chaque région de fond (79), de manière à faire apparaître une première information déterminée par la mise en forme de la région à dessin (78) pour l'observateur humain sous lumière transmise.

6. Elément de sécurité (6) selon l'une quelconque des revendications 4 à 5,
**caractérisé en ce que**
la première structure de surface (67) est prévue dans une deuxième région (74) recouvrant la première région (73) au moins en partie, et **en ce que** la deuxième région présente deux ou plusieurs sous-régions (75, 76), dans lesquelles, en tant que première structure de surface (76), différentes structures de surface sont moulées dans la couche de réflexion (64).

7. Elément de sécurité (6) selon la revendication 6,
**caractérisé en ce que**
la deuxième région (74) dépasse de la première région (73).

8. Elément de sécurité (6) selon l'une quelconque des revendications 4 à 7,
**caractérisé en ce que**
la deuxième région (74) comprend une pluralité de premières sous-régions (75) façonnées de forme identique et une pluralité de deuxièmes sous-régions (76) façonnées de forme identique, dans lequel, dans les premières sous-régions (75) et dans les deuxièmes sous-régions (76), différentes structures de surface sont moulées dans la couche de réflexion (64) et/ou les premières sous-régions (75) et les deuxièmes sous-régions possèdent une mise en forme différente, et les premières et deuxièmes sous-régions ainsi qu'en option encore d'autres sous-régions sont disposées sous la forme d'un dessin répétitif.

9. Elément de sécurité selon l'une quelconque des revendications 4 à 8,
**caractérisé en ce que**
l'élément de sécurité (8) présente une couche de réflexion métallique partielle supplémentaire (86), espacée de la couche de réflexion métallique (84), et **en ce que** la couche de réflexion métallique supplémentaire (86) est prévue en coïncidence avec la première couche de réflexion métallique (84) dans les premières zones (91), et n'est pas prévue dans les deuxièmes zones (94), et **en ce que** dans la surface de la couche de réflexion métallique supplémentaire, une deuxième structure de surface (88) est moulée, et **en ce que** la première structure de surface (84) fournit une quatrième information et la deuxième structure de surface (86) fournit une cinquième information différente de la quatrième information, de sorte qu'en visualisant les faces (101) de la couche de réflexion (84) sous lumière réfléchie, la quatrième information apparaît, qu'en visualisant les faces (102) de la couche de réflexion supplémentaire (86), la cinquième information apparaît, et qu'en visualisant sous lumière transmise, la première information apparaît.

10. Elément de sécurité (1, 3) selon l'une quelconque des revendications précédentes,
**caractérisé en ce que**
dans une deuxième région (52, 54) disposée à l'intérieur de la première région (40), une première structure de surface (43) est moulée dans une couche de reproduction (33) de l'élément de sécurité ou une première couche décorative (32) est prévue dans l'élément de sécurité, fournissant une quatrième information.

11. Elément de sécurité (1, 3) selon la revendication 10,
**caractérisé en ce que**
la couche de reproduction (33) ou la première couche décorative (32) est disposée entre la couche de réflexion métallique (34) et une première surface de l'élément de sécurité, **en ce que** dans une troisième région (53) disposée à l'intérieur de la première région (40), une deuxième structure de surface est moulée dans une couche de reproduction de l'élément de sécurité ou une deuxième couche décorative (35) est prévue dans l'élément de sécurité, fournissant une cinquième information (53), dans lequel la couche de reproduction ou la deuxième couche décorative (35) est disposée entre la couche de réflexion métallique (34) et une deuxième surface de l'élément de sécurité, de sorte qu'en visualisant les faces de la première surface sous lumière réfléchie, la quatrième information apparaît, et qu'en visualisant la face de la deuxième surface sous lumière réfléchie, la cinquième information apparaît.

12. Elément de sécurité (1, 3) selon la revendication 10,
**caractérisé en ce que**
la première structure de surface ou la première couche décorative est moulée ou prévue dans les deuxièmes zones recouvertes par la deuxième région, mais pas dans les premières zones recouvertes par la deuxième région, de sorte que la quatrième information apparaît sous lumière transmise.

13. Elément de sécurité (1, 3) selon la revendication 10 ou 12,
**caractérisé en ce que**
la première structure de surface ou la première couche décorative est moulée ou prévue dans les deuxièmes zones recouvertes par la deuxième région, **en ce que** dans une troisième région disposée à l'intérieur de la première région, une deuxième structure de surface est moulée dans une couche de reproduction de l'élément de sécurité ou une deuxième couche décorative est prévue dans l'élément de sécurité, fournissant une cinquième information, dans lequel la couche de reproduction ou la deuxième couche décorative est disposée entre la couche de réflexion métallique et une deuxième surface de l'élément de sécurité, de sorte qu'en visualisant les faces de la deuxième surface sous lumière réfléchie, la cinquième information apparaît, et qu'en visualisant sous lumière transmise, la quatrième information apparaît.

14. Elément de sécurité (1, 3) selon la revendication 13,
**caractérisé en ce que**
dans une quatrième région disposée à l'intérieur de la première région, une troisième structure de surface est moulée dans une couche de reproduction de l'élément de sécurité ou une troisième couche décorative est prévue dans l'élément de sécurité, fournissant une sixième information, dans lequel la couche de reproduction ou la troisième couche décorative est disposée entre la couche de réflexion métallique et une première surface de l'élément de sécurité, de sorte qu'en visualisant des faces de la première surface sous lumière réfléchie, la cinquième information apparaît, et qu'en visualisant des faces de la deuxième surface sous lumière réfléchie, la sixième information apparaît.

15. Elément de sécurité (1, 3) selon l'une quelconque des revendications 10 à 14,
**caractérisé en ce que**
la deuxième région se recoupe avec la troisième région, la troisième région se recoupe avec la quatrième région ou la deuxième, la troisième et la quatrième région se recoupent.
